(19) **Europäisches Patentamt / European Patent Office / Office européen des brevets**

(11) **EP 4 746 529 A1**

(12) **EUROPEAN PATENT APPLICATION**
published in accordance with Art. 153(4) EPC

(43) Date of publication:
**20.05.2026 Bulletin 2026/21**

(21) Application number: **23944692.5**

(22) Date of filing: **12.07.2023**

(51) International Patent Classification (IPC):
**H04W 52/00** (2009.01)

(52) Cooperative Patent Classification (CPC):
**H04W 52/00**

(86) International application number:
**PCT/CN2023/107068**

(87) International publication number:
**WO 2025/010672 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XING, Jinqiang
Dongguan, Guangdong 523860 (CN)**

(74) Representative: **Penza, Giancarlo
Bugnion S.p.A.
Viale Lancetti, 17
20158 Milano (IT)**

(54) **COMMUNICATION METHOD AND APPARATUS, AND DEVICE, STORAGE MEDIUM, CHIP, PRODUCT AND PROGRAM**

(57) Provided in the embodiments of the present application are a communication method and apparatus, and a device, a storage medium, a chip, a product and a program. The method comprises: a terminal device sending first information, wherein the first information comprises a first power headroom (PH), and the first PH is determined according to the transmission power of the terminal device and a first adjustment value.

The terminal device sends the first information including the first PH, and the first PH is determined according to a transmission power of the terminal device and the first adjustment value — S601

**FIG. 6**

## Description

TECHNICAL FIELD

Embodiments of the present disclosure relate to the technical field of mobile communication, and in particular, to communication methods, apparatuses, devices, a storage medium, a chip, a product, and a program.

BACKGROUND

Power headroom report (PHR) refers to the process in which the terminal device reports the power headroom (PH) to the network device. The PH is the difference between the maximum transmission power allowed by the terminal device and the currently evaluated uplink transmission power, and indicates how much transmission power the terminal device can use in addition to the current transmission power used for uplink transmission.

In the related art, the PH reported by the terminal device is inaccurate, which results in inaccurate control of the transmission power of the terminal device by the network device, thereby reducing the transmission reliability of the terminal device.

SUMMARY

Embodiments of the present disclosure provide communication methods, apparatuses, devices, a storage medium, a chip, a product, and a program.

In the first aspect, the embodiments of the present disclosure provide a communication method. The method includes the following operation.

A terminal device sends the first information including the first power headroom (PH), and the first PH is determined according to a transmission power of the terminal device and the first adjustment value.

In the second aspect, the embodiments of the present disclosure provide a communication method. The method includes the following operation.

A network device receives the first information including the first PH, and the first PH is determined according to a transmission power of the terminal device and the first adjustment value.

In the third aspect, the embodiments of the present disclosure provide a communication apparatus. The communication apparatus includes a communication unit.

The communication unit is configured to send the first information including the first PH, and the first PH is determined according to a transmission power of the terminal device and the first adjustment value.

In the fourth aspect, the embodiments of the present disclosure provide a communication apparatus. The communication apparatus includes a communication unit.

The communication unit is configured to receive the first information including the first PH, and the first PH is determined according to a transmission power of the terminal device and the first adjustment value.

In the fifth aspect, the embodiments of the present disclosure provide a terminal device. The terminal device includes a processor and a memory.

The memory is configured to store a computer program.

The processor is configured to invoke and run a computer program stored in the memory to cause the terminal device to perform the method of the first aspect.

In the sixth aspect, the embodiments of the present disclosure provide a network device. The network device includes a processor and a memory.

The memory is configured to store a computer program.

The processor is configured to invoke and run a computer program stored in the memory to cause the network device to perform the method of the second aspect.

In the seventh aspect, the embodiments of the present disclosure provide a computer storage medium. The computer storage medium stores one or more programs executable by one or more processors to implement the method of the first aspect or the second aspect.

In the eighth aspect, the embodiments of the present disclosure provide a chip. The chip includes a processor for invoking and running a computer program from a memory to implement the method of the first aspect or the second aspect.

In the ninth aspect, the embodiments of the present disclosure provide a computer program product. The computer program product includes a computer storage medium storing a computer program. The computer program includes instructions executable by at least one processor that, when executed by the at least one processor, implement the method of the first or second aspect.

In the tenth aspect, the embodiments of the present disclosure provide a computer program. The computer program causes a computer to perform the method of the first aspect or the second aspect.

In the embodiments of the present disclosure, the terminal device sends the first information including the first PH, and the first PH is determined according to a transmission power of the terminal device and the first adjustment value. In this way, since the first PH sent by the terminal device is determined according to the transmission power of the terminal device and the first adjustment value, the transmission power of the terminal device can be adjusted through the first adjustment value. The accurate first PH can be determined according to the adjusted transmission power of the terminal device, and the first PH reported by the terminal device is accurate, so that the network device can accurately control the transmission power of the terminal device, and the transmission reliability of the terminal device is improved.

BRIEF DESCRIPTION OF THE DRAWINGS

The accompanying drawings described herein are intended to provide a further understanding of the present disclosure and constitute a part of the present disclosure. The schematic embodiments of the present disclosure and the description thereof are intended to explain the present disclosure, and do not constitute an undue limitation of the present disclosure.

FIG. 1 is a schematic diagram of an application scenario according to an embodiment of the present disclosure.
FIG. 2 is a schematic diagram of a format of a Medium Access Control Control Element (MAC CE) according to an embodiment of the present disclosure.
FIG. 3 is a schematic diagram of another format of a MAC CE according to an embodiment of the present disclosure.
FIG. 4 is a schematic diagram of a downlink path loss according to an embodiment of the present disclosure.
FIG. 5 is a schematic diagram of a difference between transmission antennas and reception antennas of the terminal device according to an embodiment of the present disclosure.
FIG. 6 is a schematic flowchart of a communication method according to an embodiment of the present disclosure.
FIG. 7 is a schematic flowchart of another communication method according to an embodiment of the present disclosure.
FIG. 8 is a schematic diagram of another format of a MAC CE according to an embodiment of the present disclosure.
FIG. 9 is a schematic diagram of the structure and composition of a communication apparatus according to an embodiment of the present disclosure.
FIG. 10 is a schematic diagram of another structure and composition of a communication apparatus according to an embodiment of the present disclosure.
FIG. 11 is a schematic structural diagram of an electronic device according to an embodiment of the present disclosure.
FIG. 12 is a schematic structural diagram of a chip according to an embodiment of the present disclosure.

DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

The technical solutions described in the embodiments of the present disclosure may be arbitrarily combined as long as there is no conflict. In the description of the present disclosure, "multiple" means two or more unless specifically defined otherwise.

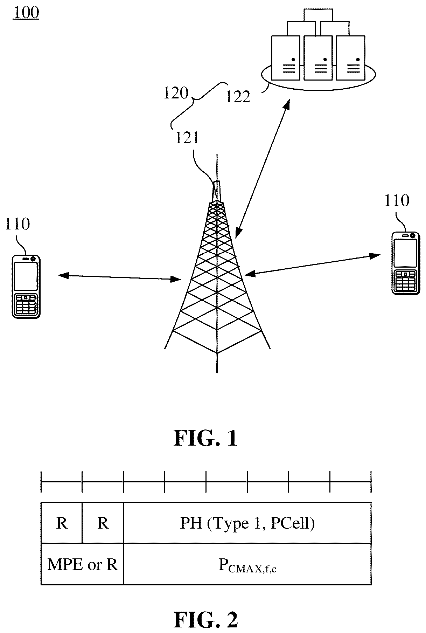

FIG. 1 is a schematic diagram of an application scenario according to an embodiment of the present disclosure. As illustrated in FIG. 1, the communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present disclosure are only illustrated with reference to the communication system 100, but the embodiments of the present disclosure is not limited thereto. That is, the technical solutions of the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution of NR system, a LTE-based access to unlicensed spectrum (LTE-U) system, a NR-based access to unlicensed spectrum (NR-U) system, an Universal Mobile Telecommunication System (UMTS), a Wireless Local Area Networks (WLAN), a Wireless Fidelity (WiFi), LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) systems, or future communication systems (for example, 6G, 7G communication systems), etc.

The network device 120 in the embodiments of the present disclosure may include an access network device 121 and/or a core network device 122. The access network device may provide communication coverage for a particular geographic area and may communicate with a terminal device 110 (for example, User Equipment (UE)) located within that coverage area.

The terminal device in any embodiment of the present disclosure may be a device having a wireless communication function, and may be deployed on land, which includes indoor or outdoor, handheld or vehicle-mounted device. It may also be deployed on the water (such as ships, etc.). It may also be deployed in the air (for example, on aircraft, balloons and satellites, etc.). The terminal device in any embodiment of the present disclosure may be referred to as UE, a Mobile Station (MS), a Mobile Terminal (MT), a subscriber unit, a subscriber station, a Mobile stage, a remote station, a remote terminal device, a mobile device, a user terminal device, a terminal device, a wireless communication device, a user agent, or a user device. The terminal device in any embodiment of the present disclosure may include one or a combination of at least two of the following: an Internet of Things (IoT) device, a satellite terminal device, a Wireless Local Loop (WLL) station, a Personal Digital Assistant (PDA), a handheld device with wireless communication function, a computing device or other processing device connected to a wireless modem, a server, a mobile phone, a tablet computer (Pad), a computer with wireless transceiver function, a handheld computer, a desktop computer, a PDA, a portable media player, a smart speaker, a navigation device, a wearable device such as a smart watch, smart glasses, a smart necklace, etc., a pedometer, a digital TV, a Virtual Reality (VR) terminal device, an Augmented Reality (AR) terminal device, a wireless terminal device in industrial control, a wireless terminal device in self driving, a wireless terminal device in remote medical surgery, a wireless terminal device in smart grid, a wireless terminal device in transportation safety, a wireless terminal device in smart city, a wireless terminal device in smart home, a vehicle in an Internet of Vehicle, a vehicle-mounted device, a vehicle-mounted module, a wireless modem, a handheld device, a Customer Premise Equipment (CPE), a smart home appliance, etc.

Alternatively, the terminal device may be any terminal device, including but not limited to terminal devices that are wired or wirelessly connected to the network device or other terminal devices.

Alternatively, the terminal device may be used for Device to Device (D2D) communication.

In any embodiment of that present disclosure, the access network device may include one or a combination of at least two of: an evolutional Node B (eNB or eNodeB) in a Long Term Evolution (LTE) system, a Next Generation Radio Access Network (NG RAN) device, a base station (gNB) in the NR system, a small station, a micro station, a wireless controller in Cloud Radio Access Network (CRAN), an access point in the wireless fidelity (Wi-Fi), a transmission reception point (TRP), a relay station, an access point, a vehicle-mounted device, a wearable device, a hub, a switch, a bridge, a router, a network device in future evolution of Public Land Mobile Network (PLMN), etc.

In any embodiment of the present disclosure, the core network device may be a 5th Generation (5G) core network (5G Core, 5GC) device. The core network device may include one or a combination of at least two of: a Sensing Function (SF), an Access and Mobility Management Function (AMF), an Authentication Server Function (AUSF), a User Plane Function (UPF), a Session Management Function (SMF), a Location Management Function (LMF), or a Policy Control Function (PCF). In other embodiments, the core network device may also be an Evolved Packet Core (EPC) device of the LTE network, for example, a Session Management Function + Core Packet Gateway (SMF + PGW-C) device. It should be understood that the SMF + PGW-C may simultaneously implement functions that the SMF and the PGW-C can achieve. In the process of network evolution, the core network device may be called by other names, or a new network entity may be formed by dividing the functions of the core network, which is not limited by the embodiments of the present disclosure.

The respective functional units in the communication system may also establish a connection through a next generation network (NG) interface to realize communication.

For example, the terminal device establishes an air interface connection with the access network device through the NR interface for transmitting user plane data and control plane signaling. The terminal device can establish a control plane signaling connection with the AMF through the NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through the NG interface 4 (N4 for short). The UPF may interact user plane data with the data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates one base station, one core network device, and two terminal devices. Alternatively, the wireless communication system 100 may include multiple base station devices and another number of terminal devices may be included within the coverage range of each base station, which is not limited in the embodiments of the present disclosure.

It should be noted that FIG. 1 only illustrates a system applicable to the present disclosure in the form of an example. Of course, the method shown in the embodiments of the present disclosure may also be applied to other systems. Further, the terms "system" and "network" are often used interchangeably herein. Herein, the term "and/or" is only used for describing an association relationship between association objects, which means that there may be three relationships. For example, A and/or B, which may mean that A exists alone, A and B exist simultaneously, and B exists alone. In addition, the character "/" in the present disclosure generally indicates that there is an "or" relationship between the association objects. It should also be understood that the "indication" mentioned in the embodiments of the present disclosure may be a direct indication, an indirect indication, or used for describing an association relationship. For example, A indicates B, which may mean that A directly indicates B, for example, B may be acquired by A. It may also be indicated that A indicates B indirectly, for example, A indicates C, and B may be obtained through C. It may also be indicated that there is an association relationship between A and B. It should also be understood that "correspondence" mentioned in the embodiments of the present disclosure may indicate that there is a direct correspondence or indirect correspondence between the two objects, may indicate that there is an association relationship between the two objects, or may indicate a relationship between indicating and being indicated, configuring and being configured, or the like. It should also be understood that the "predefined", "agreed in the protocol", "predetermined", or "predefined rule" mentioned in the embodiments of the present disclosure may be implemented by storing corresponding codes, tables, or other methods that may be used to indicate relevant information in advance in devices (including, for example, terminal devices and network devices), and the present disclosure does not limit specific implementations thereof. For example, "predefined" may refer to being defined in the protocol. It should also be understood that in the embodiments of the present disclosure, the "protocol" may refer to a standard protocol in the field of communication, and may include, for example, an LTE protocol, an NR protocol, and related protocols applied to future communication systems, which is not limited in the present disclosure.

In some embodiments, the transmission power of the terminal device is controlled by the network device. In some embodiments, there are separate transmission power control methods for a Physical Uplink Shared Channel (PUSCH), a Physical Uplink Control Channel (PUCCH), a Sounding Reference Signal (SRS), a DeModulation Reference Signal (DMRS), a Phase Tracking Reference Signal (PTRS), and the like.

Hereinafter, the transmission power control for the terminal device will be described by taking the PUSCH as an example, but the present disclosure is not limited thereto. For the transmission power control of other signals listed above (for example, PUCCH, SRS, DMRS, PTRS, etc.), the reference is made to in relevant protocols, which is not listed in the embodiments of the present disclosure one by one.

The transmission power control of the PUSCH is obtained by the following formula (1):

$$P_{PUSCH,b,f,c}(i, j, q_d, l) =$$

$$min \begin{cases} P_{CMAX,f,c}(i), \\ P_{O\_PUSCH,b,f,c}(j) + 10\, log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i,l) \end{cases}$$

$$(1)$$

Here, b represents the active uplink (UL) band width part (BWP), f represents a carrier, c represents a serving cell, i represents a PUSCH transmission occasion, j represents a parameter set configuration index, $q_d$ represents a reference signal (RS) resource index, and $\mu$ corresponds to the subcarrier spacing.

$P_{CMAX,f,c}(i)$ is a configurable maximum transmission power of the terminal device. $P_{O\_PUSCH,b,f,c}(j)$ is a reference target power value configured by the network device, which is the sum of $P_{O\_NOMINAL\_PUSCH,f,c}(j)$ (target power value applicable to all UEs in the cell) and $P_{O\_UE\_PUSCH,b,f,c}(j)$ (target ower value for a specific UE). $M_{RB,b,f,c}^{PUSCH}(i)$ is the number of RB resources used by the terminal device for uplink transmission. $\alpha_{b,f,c}(j)$ is the weighted value of Path Loss (PL), and is also a parameter configured by the network. $PL_{b,f,c}(q_d)$ is a downlink path loss value between the terminal device and the network device. $\Delta_{TF,b,f,c}(i)$ is a parameter used for power adjustment according to the modulation and encoding mode currently used by the terminal device. $f_{b,f,c}(i, l)$ is a parameter for the network device controlling the terminal device to increase and decrease transmission power in real time through the closed-loop power control parameter.

Through the above formula, it may be seen that the value of transmission power will be affected by $PL_{b,f,c}(q_d)$.

The PH is the difference between the configurable maximum transmission power of the terminal device (i.e., the above $P_{CMAX,f,c}(i)$) and the target transmission power of the terminal device (i.e., the above $P_{PUSCH,b,f,c}(i, j, q_d, l)$), which is abbreviated here as $P_{target}$). In implementation, $P_{CMAX,f,c}(i)$ may be replaced with $P_{cmax}$, or other letters. In implementation, $P_{PUSCH,b,f,c}(i, j, q_d, l)$ may be replaced with $P_{target}$, or other letters. For example, PH = $P_{cmax}$-$P_{target}$.

In some embodiments, the PH is reported through MAC layer signaling. For example, the terminal device may report the first information, and the first information may include the medium access control control unit (MAC CE). Alternatively, the MAC CE may be a PHR MAC CE. Alternatively, the PHR MAC CE may be a single entry PHR MAC CE (which may also be referred to as a MAC CE with a fixed size) or a multi-entry PHR MAC CE (which may also be referred to as a MAC CE with a variable size).

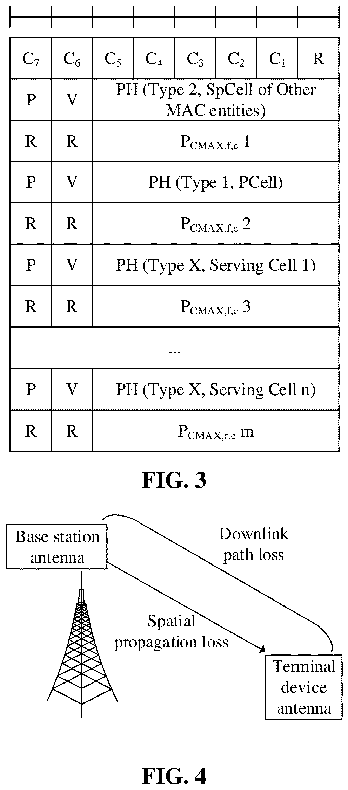

FIG. 2 is a schematic diagram of a format of a MAC CE according to an embodiment of the present disclosure. FIG. 3 is a schematic diagram of a format of another MAC CE according to an embodiment of the present disclosure. The format of the MAC CE in FIG. 2 is the format of the MAC CE with the fixed size, and the format of the MAC CE in FIG. 3 is the format of the MAC CE with the variable size. In the formats of the MAC CE in FIG. 2 and FIG. 3, one row corresponds to one byte.

The $C_x$ field may be used to represent whether the Secondary Cell (SCell) with the index number x reports the power headroom (PH). The R field is reserved bit(s). The P field is used to represent whether power backoff is applied. The value of the V field may be 0 or 1. When V is 1, it is used to represent that the corresponding PH is the PH calculated based on the reference format, and when V is 0, it is used to represent that the corresponding PH is the PH calculated based on the actual transmission. The maximum permissible exposure (MPE) is used to determine whether the effects of the radiation of the terminal device on human body meet the standards. The $P_{CMAX,f,c}$, $P_{CMAX,f,c}1$, $P_{CMAX,f,c}2$, $P_{CMAX,f,c}3$, $P_{CMAX,f,c}m$ fields are used to represent the maximum transmission powers of the corresponding cells.

The PH (Type 1, Primary Cell (PCell)) field is used to represent the PH of the PCell under Type 1.

The PH (Type 2, SpCell of Other MAC entities) field is used to represent the PH of SpCell of other MAC entities under Type 2. Here, SpCell is PCell + Primary Secondary Cell (PSCell).

PH (Type X, Serving Cell 1) field is used to represent the PH of the Serving Cell 1 under Type X. The value of X may be 1 or 3.

The PH (Type X, Service Cell n) field is used to represent the PH of the Service Cell n under Type X. The value of X may be 1 or 3, and n is an integer greater than 1, which is the index number of the Service Cell.

Alternatively, in the MAC CE with the fixed size or the MAC CE with the variable size, there may also be other PH fields. For example, the other PH fields may include at least one of the following: a PH (Type 2, PCell) field for representing the PH of the PCell under Type 2, a PH (Type 2, PUCCH SCell) field for representing the PH of the SCell configured with a PUCCH under Type 2, a PH (Type 2, PSCell) field for representing the PH of the PSCell under Type 2, etc., which is not limited in the embodiments of the present disclosure.

In some embodiments, Type 1 may refer to the PH when only the PUSCH is currently transmitted in the cell. Type 2 may refer to the PH when the PUCCH and the PUSCH are currently transmitted simultaneously in the cell. Type 3 may refer to the PH when the SRS is currently transmitted in the cell.

It should be noted that although FIG. 2 and FIG. 3 illustrate schematic diagrams of two formats of the MAC CE, the embodiments of the present disclosure are not limited thereto, and any format of the MAC CE should be within the scope of protection of the present disclosure. For example, in other embodiments, the MAC CE may have other formats, for example, the MAC CE may include one byte, or the MAC CE may include multiple bytes, and the value range of x in $C_x$ is from 1 to 31.

In the formula (1), $PL_{b,f,c}(q_d)$ in the uplink transmission power control is the downlink path loss value, that is, the path loss from the network device to the terminal device. The path loss includes at least one of the following: a spatial propagation loss, a transmission antenna gain of the network device, a reception antenna loss of the terminal device, or the like. The path loss is applied to the calculation of the uplink transmission power $P_{target}$ of the terminal device. Alternatively, in any embodiment of the present disclosure, the transmission antenna gain of the network device may be understood as, or may be referred to as, or may be, the transmission antenna loss of the network device. For example, the transmission antenna gain of the network device is -A dB, which means that the transmission antenna loss of the network device is A dB.

FIG. 4 is a schematic diagram of a downlink path loss according to an embodiment of the present disclosure. As illustrated in FIG. 4, the downlink path loss includes a base station antenna (i.e., transmission antenna of the base station) gain, a spatial propagation loss, and a terminal device antenna (i.e., reception antenna of the terminal device) loss.

However, the downlink path loss of the terminal device may not be equal to the uplink path loss of the terminal device. For example, in the Frequency Division Duplex (FDD) frequency band, the uplink and the downlink are at different operating frequencies, and then the propagation losses are different. In addition, there are differences between the transmission antenna(s) and the reception antenna(s) of the terminal device, for example, the number of reception antenna(s) of the terminal device is greater than the number of transmission antenna(s).

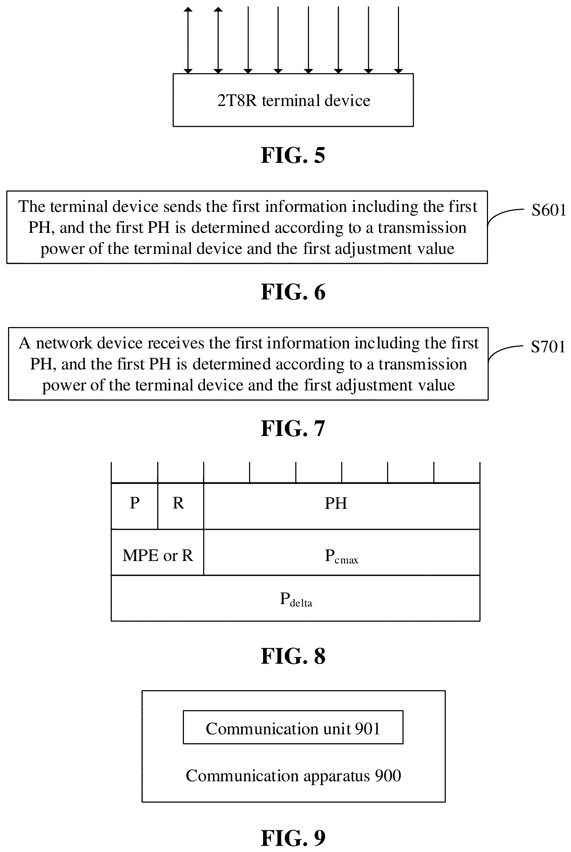

FIG. 5 is a schematic diagram of a difference between transmission antennas and reception antennas of the terminal device according to an embodiment of the present disclosure. As illustrated in FIG. 5, the number of reception antennas of the terminal device may be 8, and the number of transmission antennas may be 2, that is, the terminal device may be a 2T8R terminal device. In this case, the downlink antenna reception performance of the terminal device is better than the uplink transmission antenna performance, and this difference becomes larger as the number of reception antennas increases.

It should be noted that FIG. 5 is only a schematic diagram of the numbers of reception antennas and transmission antennas of the terminal device, and the numbers of reception antenna(s) and transmission antenna(s) of the terminal device are not limited in the embodiments of the present disclosure. For example, the number of reception antenna(s) of the terminal device may be other values, and exemplarily, the number of reception antenna(s) of the terminal device may be 2, 4, 16, and the like. For example, the number of transmission antenna(s) of the terminal device may be other values, and exemplarily, the number of transmission antenna(s) of the terminal device may be 1, 4, 8, or the like.

In the formula (1), since the transmission power of the terminal device is determined by the downlink path loss, and the downlink path loss of the terminal device may not be equal to the uplink path loss of the terminal device, there is a certain deviation in the current transmission power control of the terminal device, which results in the reported PH deviating from the real PH of the terminal device to a certain extent, so as to cause excessive or too small scheduling of the transmission power of the terminal device by the network device, thereby affecting the uplink performance of the terminal device, for example, reducing the reliability of uplink transmission.

In order to facilitate understanding of the technical solutions of the embodiments of the present disclosure, the technical solutions of the present disclosure will be described in detail below with reference to specific examples. The solutions in any one or more of the above embodiments may be arbitrarily combined with the technical solutions of the embodiments of the present disclosure as optional solutions, and all of them belong to the scope of protection of the embodiments of the present disclosure. The embodiments of the present disclosure include at least a part of the following contents.

FIG. 6 is a schematic flowchart of a communication method according to an embodiment of the present disclosure. As illustrated in FIG. 6, the method is applied to a terminal device, and the method includes the following operation.

In operation S601, a terminal device sends the first information including the first PH, and the first PH is determined according to a transmission power of the terminal device and the first adjustment value.

FIG. 7 is a schematic flowchart of another communication method according to an embodiment of the present disclosure. As illustrated in FIG. 7, the method is applied to a network device, and the method includes the following operation.

In operation S701, a network device receives the first information including the first PH, and the first PH is determined according to a transmission power of the terminal device and the first adjustment value.

Alternatively, the first information may include the first MAC CE and/or the second MAC CE. Alternatively, the first MAC CE may include a MAC CE with a fixed size, and the second MAC CE may include a MAC CE with a variable size. Alternatively, the first MAC CE may include the first PH, and/or the second MAC CE may include the first PH.

Alternatively, the transmission power of the terminal device may be determined according to the downlink path loss. Alternatively, the transmission power of the terminal device may be determined based on the formula (1), or the transmission power of the terminal device may be determined in another manner other than the formula (1). For example, the calculation method of the transmission power of the terminal device corresponding to sending the PUSCH and the calculation method of the transmission power of the terminal device corresponding to sending PUCCH are different, and the transmission powers of the terminal device corresponding to the PUSCH, the PUCCH, the SRS, the DMRS, and the PTRS are determined according to the downlink path losses. The determination method of the transmission power of the terminal device is not limited in the embodiments of the present disclosure.

Alternatively, the first adjustment value is used to adjust the transmission power of the terminal device to obtain the adjusted transmission power of the terminal device, and the first PH may be determined according to the adjusted transmission power of the terminal device. Alternatively, the first PH may be determined according to a difference between the maximum transmission power configured for the terminal device and the adjusted transmission power of the terminal device.

Alternatively, the first adjustment value may be used to represent an association/relationship between the uplink path loss and the downlink path loss. For example, the first adjustment value may include a result of a difference between the uplink path loss and the downlink path loss. For another example, the first adjustment value may include a result of a difference between the downlink path loss and the uplink path loss. For another example, the first adjustment value may be a result of dividing the uplink path loss by the downlink path loss. For another example, the first adjustment value may be a result of dividing the downlink path loss by the uplink path loss.

Alternatively, the first adjustment value includes a result of a difference between the uplink path loss and the downlink path loss, and the adjusted transmission power of the terminal device is determined according to the sum of the transmission power of the terminal device and the first adjustment value. Alternatively, the first adjustment value includes a result of a difference between the downlink path loss and the uplink path loss, and the adjusted transmission power of the terminal device is determined according to the difference between the transmission power of the terminal device and the first adjustment value. Alternatively, the first adjustment value is a result of dividing the uplink path loss by the downlink path loss, and the adjusted transmission power of the terminal device is determined according to a product of the transmission power of the terminal device and the first adjustment value. Alternatively, the first adjustment value is a result of dividing the downlink path loss by the uplink path loss, and the adjusted transmission power of the terminal device is determined according to the result of dividing the transmission power of the terminal device by the first adjustment value.

Alternatively, in any embodiment of the present disclosure, the adjustment value may be replaced by at least one of the following: adjustment amount, correction amount, correction value, regulating amount, regulating value, offset value, offset amount, or the like. Exemplarily, the first adjustment value may be replaced with at least one of the following: the first adjustment amount, the first correction amount, the first correction value, the first regulating amount, the first regulating value, the first offset value, the first offset amount, or the like. Exemplarily, the second adjustment value may be replaced with at least one of the following: the second adjustment amount, the second correction amount, the second correction value, the second regulating amount, the second regulating value, the second offset value, the second offset amount, or the like.

In the embodiments of the present disclosure, the terminal device sending the first information including the first PH, and the first PH is determined according to a transmission power of the terminal device and the first adjustment value. In this way, since the first PH sent by the terminal device is determined according to the transmission power of the terminal device and the first adjustment value, the transmission power of the terminal device can be adjusted through the first adjustment value. The accurate first PH can be determined according to the adjusted transmission power of the terminal device, and the first PH reported by the terminal device is accurate, so that the network device can accurately control the transmission power of the terminal device, and the transmission reliability of the terminal device is improved.

In some embodiments, the first adjustment value is determined according to a difference between an uplink loss and a downlink loss. Alternatively, the difference between the uplink loss and the downlink loss may include at least one of: the first difference between the uplink spatial propagation loss and the downlink spatial propagation loss, or the second difference between the transmission antenna loss of the terminal device and the reception antenna loss of the terminal device.

In some embodiments, the first adjustment value is determined according to at least one of: the first difference between the uplink spatial propagation loss and the downlink spatial propagation loss, or the second difference between the transmission antenna loss of the terminal device and the reception antenna loss of the terminal device.

Alternatively, the first adjustment value may be determined according to the first difference. Alternatively, the first adjustment value may be determined according to the second difference. Alternatively, the first adjustment value may be determined according to the first difference and the second difference. For example, the first adjustment value may be a sum of the first difference and the second difference, or the first adjustment value may be a difference from the first difference to the second difference, or the first adjustment value may be a difference from the second difference to the first difference.

Alternatively, the uplink path loss may include an uplink spatial propagation loss and/or a transmission antenna loss of the terminal device. Alternatively, the downlink path loss may include a downlink spatial propagation loss and/or a reception antenna loss of the terminal device. Alternatively, the uplink path loss may further include a reception antenna loss of the network device. Alternatively, the downlink path loss may further include a transmission antenna loss of the network device.

Alternatively, the transmission antenna loss of the terminal device may include a loss of one or more transmit antennas currently used by the terminal device for transmission. Alternatively, the reception antenna loss of the terminal device may include a loss of one or more reception antennas currently used by the terminal device for reception. Alternatively, the transmission antenna loss of the terminal device may be less than, greater than, or equal to the reception antenna loss of the terminal device.

In some embodiments, the first adjustment value is determined according to a difference between the uplink loss and the downlink loss. In other embodiments, the first adjustment value is determined according to a difference between the downlink loss and the uplink loss.

In some embodiments, the first adjustment value is determined according to at least one of: the first result of a difference between the uplink spatial propagation loss and the downlink spatial propagation loss, or the second result of a difference between the transmission antenna loss of the terminal device and the reception antenna loss of the terminal device.

In some embodiments, the first adjustment value is determined according to at least one of: the third result of a difference between the downlink spatial propagation loss and the uplink spatial propagation loss, or the fourth result of a difference between the reception antenna loss of the terminal device and the transmission antenna loss of the terminal device.

Alternatively, the first difference may include the first result or the third result. Alternatively, the second difference may include the second result or the fourth result. For example, the first difference includes the first result and the second difference includes the second result. For another example, the first difference includes the third result and the second difference includes the fourth result.

In some embodiments, the first adjustment value is the first result.

In some embodiments, the first adjustment value is the second result.

In some embodiments, the first adjustment value is a sum of the first result and the second result.

In some embodiments, the first adjustment value is the third result.

In some embodiments, the first adjustment value is the fourth result.

In some embodiments, the first adjustment value is a sum of the third result and the fourth result.

In some embodiments, the first difference may be determined according to an uplink operating frequency and a downlink operating frequency.

In some embodiments, the first result or the third result is determined according to an uplink operating frequency and a downlink operating frequency.

For example, the first result is determined according to the uplink operating frequency and the downlink operating frequency. For another example, the third result is determined according to the uplink operating frequency and the downlink operating frequency.

Alternatively, the first result may be determined according to a difference between the second numerical value and the third numerical value. Alternatively, the third result may be determined according to a difference between the third numerical value and the second numerical value.

Alternatively, the second numerical value may be determined according to a logarithmic function of the uplink operating frequency, and the third numerical value may be determined according to a logarithmic function of the downlink operating frequency. Alternatively, the functional expression of the logarithmic function of the uplink operating frequency may be the same as or different from of the functional expression of the logarithmic function of the downlink operating frequency. For example, taking the functional expression of the logarithmic function of the uplink operating frequency being the same as the functional expression of the logarithmic function of the downlink operating frequency as an example, and the logarithmic function of the uplink operating frequency is 1g M1, and the logarithmic function of the downlink operating frequency is 1g M2.

In some embodiments, the first result is determined according to 20 × 1g M1-20 × 1g M2. In some embodiments, the third result is determined according to 20 ×1g M2-20 ×1g M1. M1 is the uplink operating frequency and M2 is the downlink operating frequency.

In other embodiments, the first result is determined according to 20 × 1g D1 + 20 × 1g M1 - (20 × 1g D2 + 20 × 1g M2). The third result is determined according to 20 × 1g D2 + 20 × 1g M2 - (20 × 1gD1 + 20 × 1g M 1). Alternatively, D2 may be determined according to D1 and the movement information of the terminal device, or D1 may be determined according to D2 and the movement information of the terminal device. Alternatively, the movement information of the terminal device may include at least one of: movement speed information, movement trajectory information, movement direction information, movement acceleration information, or the like.

Alternatively, the uplink spatial propagation loss R1 may be calculated as R1 = 32.4 +20 × 1g D1+20 × lg M1 (the unit is dB), D1 is the distance from the terminal device to the network device, and M1 is the uplink operating frequency. Alternatively, the downlink spatial propagation loss R2 may be calculated as R2 = 32.4 +20 × 1g D2 +20 × 1g M2 (the unit is dB), D2 is the distance from the network device to the terminal device, and M2 is the downlink operating frequency.

It should be noted that in the above description, the spatial propagation loss is calculated according to R = 32.4 +20 × 1g D +20 × 1g M (the unit is dB). However, in other embodiments, the spatial propagation loss may be calculated by other means, and the embodiments of the present disclosure are not limited thereto. For example, the spatial propagation loss P can be calculated as $P = -10 \log_{10} \frac{G_l \lambda^2}{(4\pi R)^2}$. Here, $G_l$ is $P_t G_t G_r$, $P_t$ is the transmission power, $G_t$ is the antenna gain of the transmitting end, $G_r$ is the antenna gain of the receiving end, $\lambda$ is the carrier wavelength corresponding to the operating frequency, and $R$ is the distance between the terminal device and the network device. Thus, the first result is determined according to the result of P1-P2, and the third result is determined according to the result of P2-P1.

$$P1 = -10 \log_{10} \frac{G_{l1} \lambda 1^2}{(4\pi R1)^2}, \ P2 = -10 \log_{10} \frac{G_{l2} \lambda 2^2}{(4\pi R2)^2}$$ . Here, $P_t$ in $G_{l1}$ is the transmission power of the terminal device, $\lambda 1$ is determined according to the uplink operating frequency, $R1$ represents the distance from the terminal device to the network device, $P_t$ in $G_{l2}$ is the transmission power of the network device, $\lambda 2$ is determined according to the downlink operating frequency, and $R2$ represents the distance from the network device to the terminal device. Alternatively, $R1$ and $R2$ may be the same or different. As another example, the spatial propagation loss L may be calculated as L =20 × $\log_{10}$ (4$\pi d$/$\lambda$). Here, $d$ is the distance between the terminal device and the network device, and $\lambda$ is the carrier wavelength corresponds to the operating frequency. Thus, the first result is determined according to L1-L2, and the third result is determined according to L2-L1. L1 =20 × $\log_{10}$(4$\pi d$1/$\lambda$1). Here, $\lambda$1 is determined according to the uplink operating frequency, $d$1 represents the distance from the terminal device to the network device. L2 =20 × $\log_{10}$(4$\pi d$2/$\lambda$2). Here, $\lambda$2 is determined according to the uplink operating frequency, $d$2 represents the distance from the terminal device to the network device. Alternatively, d1 and $d$2 may be the same or different.

In some embodiments, the downlink spatial propagation loss is determined according to the first transmission parameter information for sending the first reference signal by the network device and the first reception parameter information for receiving the first reference signal by the terminal device.

Alternatively, the first reference signal may include a downlink reference signal. Alternatively, the downlink reference signal may include at least one of: a Synchronization Signal Block (SSB), a DMRS, or a Channel State Information-Reference Signal (CSI-RS). The SSB may also be referred to as a Synchronization Signal/Physical Broadcast Channel Block (SS/PBCH block) or the like.

Alternatively, at least one of the first transmission parameter information, the first reception parameter information, the following described second transmission parameter information, and the following described second reception parameter information may include at least one of the following parameter values: a Reference Signal Received Power (RSRP), a Reference Signal Received Quality (RSRQ), a Received Signal Strength Indicator (RSSI), a Signal to Interference plus Noise Ratio (SINR), Received Signal Code Power (RSCP), or Signal Noise Ratio (SNR). Alternatively, the first transmission parameter information and the first reception parameter information may be the same.

For example, the downlink reference signal may include an SSB, and the first transmission parameter information and the first reception parameter information may include RSRP values. For another example, the downlink reference signal may include a CSI-RS, and the first transmission parameter information and the first reception parameter information may include RSRP values. For another example, the downlink reference signal may include an SSB, and the first transmission parameter information and the first reception parameter information may include RSRP values and RSSI values. It should be noted that only a few examples of the downlink reference signal, the first transmission parameter information, and the first reception parameter information are listed here, and those skilled in the art will know that in other embodiments, the downlink reference signal, the first transmission parameter information, and the first reception parameter information may also include the above-mentioned others, which is not limited in the embodiments of the present disclosure.

In some embodiments, the downlink spatial propagation loss is determined according to a difference between the first transmission parameter information and the first reception parameter information.

For example, when the first transmission parameter information includes the first RSRP and the first reception parameter information includes the second RSRP, the downlink spatial propagation loss is determined according to the difference between the first RSRP and the second RSRP. For another example, when the first transmission parameter information includes the first RSSI and the first reception parameter information includes the second RSSI, the downlink spatial propagation loss is determined according to a difference between the first RSSI and the second RSSI. For another example, when the first transmission parameter information includes the first RSRP and the first RSSI, and the first reception parameter information includes the second RSRP and the second RSSI, the downlink spatial propagation loss is determined according to a difference (which may be simply referred to as the first difference) between the first RSRP and the second RSRP and a difference (which may be simply referred to as the second difference) between the first RSSI and the second RSSI. Exemplarily, the downlink spatial propagation loss may be determined according to a smaller one of the first difference and the second difference, or may be determined according to a greater one of the first difference and the second difference, or may be determined according to an average of the first difference and the second difference, or may be determined according to a weighted average of the first difference value and the second difference value.

In some embodiments, for the terminal device side, the method further includes: the terminal device receives the uplink spatial propagation loss.

In some embodiments, for the network device side, the method further includes: the network device sends the uplink propagation loss.

The uplink spatial propagation loss is determined according to the second transmission parameter information for sending the second reference signal by the terminal device and the second reception parameter information for receiving the second reference signal by the network device.

Alternatively, the second reference signal may include an uplink reference signal. Alternatively, the uplink reference signal may include at least one of the following: a SRS, a DMRS, or a PTRS.

For example, the uplink reference signal may include an SRS. The second transmission parameter information and the second reception parameter information may include RSRP values. For another example, the uplink reference signal may include a DMRS. The second transmission parameter information and the second reception parameter information may include RSRP values. For another example, the uplink reference signal may include an SRS. The second transmission parameter information and the second reception parameter information may include RSRP values and RSSI values. It should be noted that only a few examples of the uplink reference signal, the second transmission parameter information, and the second reception parameter information are listed here, and those skilled in the art will know that in other embodiments, the uplink reference signal, the second transmission parameter information, and the second reception parameter information may also include the above-mentioned others, which is not limited in the embodiments of the present disclosure.

In some embodiments, the uplink spatial propagation loss is determined according to a difference between the second transmission parameter information and the second reception parameter information.

For example, when the second transmission parameter information includes the third RSRP and the second reception parameter information includes the fourth RSRP, the uplink spatial propagation loss is determined according to the difference between the third RSRP and the fourth RSRP. For another example, when the second transmission parameter information includes the third RSSI and the second reception parameter information includes the fourth RSSI, the uplink spatial propagation loss is determined according to a difference between the third RSSI and the fourth RSSI. For another example, when the second transmission parameter information includes the third RSRP and the third RSSI, and the second reception parameter information includes the fourth RSRP and the fourth RSSI, the uplink spatial propagation loss is determined according to a difference (which may be simply referred to as the third difference value) between the third RSRP and the fourth RSRP and a difference (which may be simply referred to as the fourth difference value) between the third RSSI and the fourth RSSI. For example, the uplink spatial propagation loss may be determined according to a smaller one of the third difference value and the fourth difference value, or may be determined according to a greater one of the third difference value and the fourth difference value, or may be determined from an average of the third difference value and the fourth difference value, or may be determined according to a weighted average of the third difference value and the fourth difference value.

In some embodiments, the network device may send the second reception parameter information to the terminal device, and the terminal device may determine the uplink spatial propagation loss according to the second reception parameter information and the second transmission parameter information.

In some embodiments, at least one of the second result, the fourth result, the transmission antenna loss of the terminal device, and the reception antenna loss of the terminal device is determined according to configuration information of the terminal device, or is predefined by the terminal device, or is agreed in a protocol.

Alternatively, at least one of the second result, the fourth result, the transmission antenna loss of the terminal device, and the reception antenna loss of the terminal device may be stored in the terminal device, so that the terminal device determines the first adjustment value according to the second result, or determines the first adjustment value according to the fourth result, or determines the first adjustment value according to the transmission antenna loss of the terminal device and the reception antenna loss of the terminal device.

Alternatively, the terminal device may store one or more first sub-results, and/or the one or more first sub-results may be determined according to configuration information of the terminal device, may be predefined by the terminal device, or may be agreed in a protocol, and the differences between the number of transmission antenna(s) of the terminal device and the number of reception antenna(s) of the terminal device corresponding to different first sub-results are different. Alternatively, the terminal device may store one or more second sub-results, and/or the one or more second sub-results may be determined according to configuration information of the terminal device, may be predefined by the terminal device, or may be agreed in a protocol, and the differences between the number of reception antenna(s) of the terminal device and the number of transmission antenna(s) of the terminal device corresponding to different second sub-results are different.

Alternatively, the terminal device may store the transmission antenna loss of one transmission antenna of the terminal device, and/or the transmission antenna loss of one transmission antenna may be determined according to the configuration information of the terminal device, may be predefined by the terminal device, or may be agreed in a protocol. The terminal device may determine the transmission antenna loss of the terminal device according to the transmission antenna loss of the one transmission antenna and the number of transmission antenna(s) currently used for transmission. Alternatively, the terminal device may store the reception antenna loss of one reception antenna of the terminal device, and/or the reception antenna loss of one reception antenna may be determined according to configuration information of the terminal device, may be predefined by the terminal device, or may be agreed in a protocol. The terminal device may determine the reception antenna loss of the terminal device according to the reception antenna loss of the one reception antenna and the number of reception antenna(s) currently used for reception.

Alternatively, the terminal device may store one or more transmission antenna losses, and/or the one or more transmission antenna losses may be determined according to configuration information of the terminal device, may be predefined by the terminal device, or may be agreed in a protocol. Different transmission antenna losses correspond to different numbers of transmission antennas. The terminal device may determine the transmission antenna loss of the terminal device from the one or more transmission antenna losses according to the number of transmission antenna(s) currently used for transmission. Alternatively, the terminal device may store one or more reception antenna losses, and/or the one or more reception antenna losses may be determined according to configuration information of the terminal device, may be predefined by the terminal device, or may be agreed in a protocol. Different reception antenna losses correspond to different numbers of reception antennas. The terminal device may determine the reception antenna loss of the terminal device from the one or more reception antenna losses according to the number of reception antenna(s) currently used for reception.

In some embodiments, the first PH is determined according to a sum of the transmission power of the terminal device and the first adjustment value. In some embodiments, the first PH is determined according to a difference between the transmission power of the terminal device and the first adjustment value.

Alternatively, the first PH is determined according to the adjusted transmission power of the terminal device, and the adjusted transmission power of the terminal device is determined according to the sum of the transmission power of the terminal device and the first adjustment value, or the adjusted transmission power of the terminal device is determined according to the difference between the transmission power of the terminal device and the first adjustment value.

Alternatively, in a case that the first adjustment value is determined according to at least one of following: the first result of the difference between the uplink spatial propagation loss and the downlink spatial propagation loss or the second result of the difference between the transmission antenna loss of the terminal device and the reception antenna loss of the terminal device, the first PH/the adjusted transmission power of the terminal device/the following described first value is determined according to a sum of the transmission power of the terminal device and the first adjustment value.

Alternatively, in a case that the first adjustment value is determined according to at least one of following: the third result of the difference between the downlink spatial propagation loss and the uplink spatial propagation loss or the fourth result of the difference between the reception antenna loss of the terminal device and the transmission antenna loss of the terminal device, the first PH/the adjusted transmission power of the terminal device/the following first value is determined according to a difference between the transmission power of the terminal device and the first adjustment value.

In the embodiments of the present disclosure, since the calculation of the transmission power of the terminal device is determined according to the downlink path loss, the transmission power of the terminal device is adjusted through the first adjustment value, and the first adjustment value is determined according to the difference between the uplink path loss and the downlink path loss, so that the difference between the uplink path loss and the downlink path loss can be taken into account for the adjusted transmission power of the terminal device, and thus the first PH determined through the adjusted transmission power of the terminal device is more accurate.

In some embodiments, the first PH is determined according to the transmission power of the terminal device, the first adjustment value, and a maximum transmission power configured for the terminal device.

Alternatively, the first PH is determined according to the adjusted transmission power of the terminal device and the maximum transmission power configured for the terminal device. The adjusted transmission power of the terminal device is determined according to the transmission power of the terminal device and the first adjustment value. Exemplarily, the adjusted transmission power of the terminal device may be determined according to the sum of the transmission power of the terminal device and the first adjustment value, or the adjusted transmission power of the terminal device may be determined according to the difference between the transmission power of the terminal device and the first adjustment value.

In some embodiments, the first PH is determined according to a difference between the maximum transmission power configured for the terminal device and the first numerical value. The first numerical value is determined according to a sum of the transmission power of the terminal device and the first adjustment value, or the first numerical value is determined according to a difference between the transmission power of the terminal device and the first adjustment value.

Alternatively, the first numerical value may be the adjusted transmission power of the terminal device.

Alternatively, the first PH may be a difference between the maximum transmission power configured for the terminal device and the first numerical value. Alternatively, the first numerical value may be a sum of the transmission power of the terminal device and the first adjustment value, or the first numerical value may be a difference between the transmission power of the terminal device and the first adjustment value.

In some embodiments, the first information further includes the first adjustment value, and/or the first information further includes the first indication information for indicating use of the first adjustment value.

Alternatively, the first indication information being used to indicate the use of the first adjustment value may include that the first indication information is used to indicate that the first PH is determined by using the first adjustment value.

Alternatively, the first information may include the first adjustment value without including the first indication information. Alternatively, the first information may include the first indication information without including the first adjustment value. Alternatively, the first information may include the first adjustment value and the first indication information.

In some embodiments, the first information further includes one or more first bits carrying the first indication information, and the one or more first bits include(s) reserved bit(s) and/or bit(s) agreed in a protocol.

Alternatively, the first indication information may be the first numerical value. Using the first adjustment value may be indicated by the first indication information being the first numerical value.

In other embodiments, the one or more first bits may carry the fourth indication information for indicating that the first adjustment value is not used. Alternatively, the fourth indication information being used to indicate not using the first adjustment value may include: the fourth indication information is used to indicate that the first adjustment value is not used to determine the first PH.

Alternatively, the fourth indication information may be the second numerical value. Not using the first adjustment value may be indicated by the fourth indication information being the second numerical value.

Alternatively, the first indication information may be 1, and the fourth indication information may be 0. Alternatively, the first indication information may be 0, and the fourth indication information may be 1. Alternatively, the first indication information may be 11, and the fourth indication information may be 01, 10, or 00. The values of the first indication information and the fourth indication information are not limited in the embodiments of the present disclosure.

Alternatively, the first indication information/the fourth indication information may be carried in one first bit, or the first indication information/the fourth indication information may be carried in multiple first bits. For example, the first indication information/the fourth indication information may be carried in one reserved bit or in one bit agreed in the protocol. For another example, the first indication information/the fourth indication information may be carried in multiple reserved bits or in multiple bits agreed in the protocol. For another example, the first indication information/the fourth indication information may be carried in one or more reserved bits and one or more bits agreed in the protocol.

In some embodiments, the first information further includes one or more second bits. The one or more second bits carry the first adjustment value.

Alternatively, the first bit(s) and the second bit(s) may be different bits in the first information.

Alternatively, multiple second bits may be consecutive or non-consecutive bits. Alternatively, the multiple second bits may be in one byte, or the multiple second bits may be in multiple consecutive or non-consecutive bytes.

In some embodiments, the one or more second bits are included in the first byte(s), the first byte(s) is one or more bytes following the second byte(s), and the second byte(s) carries a maximum transmission power configured for the terminal device.

Alternatively, the first byte(s) may be one byte, or the first byte(s) may be multiple consecutive or non-consecutive bytes.

Alternatively, the first byte(s) may include 8 bits, and the one or more second bits may be a part of the bits or all of the bits in the first byte(s). Alternatively, the one or more second bits may be the first bit to the N-th bit from right to left in the first byte(s), and N is an integer greater than or equal to 8. Alternatively, the one or more second bits may be the first bit to the N-th bit from left to right in the first byte(s), and N is an integer greater than or equal to 8. Alternatively, the first bit and the second bit from left to right of the first byte(s) may both be reserved bits, or bits agreed in the protocol, or one bit being a reserved bit and the other bit being a bit agreed in the protocol. Alternatively, the third bit to the eighth bit from left to right of the first byte(s) may be above one or more second bits. Alternatively, in other embodiments, all of the bits of the first byte(s) may be above one or more second bits.

Alternatively, one or more first bytes may be included in one MAC CE. For example, in a case that one MAC CE is a MAC CE with the fixed size, the MAC CE with the fixed size includes one first byte, which is one byte after the second byte(s). For another example, in a case that one MAC CE is a MAC CE with the variable size, the MAC CE with the variable size includes one first byte, which is one byte after all the second bytes. In this case, one or more PHs in the MAC CE with the variable size may be determined by using the same first adjustment value, and the one or more PHs include the first PH. For another example, in a case that one MAC CE is a MAC CE with the variable size, the MAC CE with the variable size includes one or more PHs, the one or more PHs correspond to one or more first bytes one to one, and each first byte is one byte after the second byte corresponding to each PH. In this case, each of one or more PHs in the MAC CE with the variable size is determined by using an adjustment value corresponding to the PH.

In the above embodiments, the first byte(s) is one or more bytes following the second byte(s). Alternatively, in other embodiments, the first byte(s) may be one or more bytes between the third byte(s) and the second byte(s), and the third byte(s) carries the PH(s). Alternatively, in other embodiments, the first byte(s) may be one or more bytes before the third byte(s). The position of the first byte(s) is not limited in the embodiments of the present disclosure, as long as the first byte(s) can include the above one or more second bits.

In the above embodiment, the one or more second bits are included in the first byte(s). Alternatively, in other embodiments, the one or more second bits are included in the second byte(s). For example, the one or more second bits are reserved bit(s) or bit(s) agreed in the protocol in the second byte(s). Alternatively, in other embodiments, the one or more second bits are included in the third bit(s). For example, the one or more third bits are reserved bit(s) or bit(s) agreed in the protocol in the third byte(s).

In some embodiments, at the terminal device side, the method further includes: the terminal device sends the second adjustment value corresponding to each of multiple frequency bands.

In some embodiments, at the network device side, the method further includes: the network device receives the second adjustment value corresponding to each of the multiple frequency bands.

Alternatively, the second adjustment values include the first adjustment value.

Alternatively, the frequency band currently used by the terminal device may be included in the multiple frequency bands. For example, the frequency band currently used by the terminal device is the first frequency band, and the first frequency band is included in the multiple frequency bands. Alternatively, the first adjustment value may be the second adjustment value corresponding to the first frequency band.

Alternatively, the multiple frequency bands may include customized frequency bands, and/or the multiple frequency bands may include frequency bands agreed in the protocol. Alternatively, the multiple frequency bands may include a 4G frequency band and/or a 5G frequency band. For example, the multiple frequency bands may include at least one of n1, n34, n35, n78, n79, n86, band1, band19, band40, or the like.

Alternatively, the multiple frequency bands may include at least one of: an FDD frequency band, a TDD frequency band, a Supplementary Download (SDL) frequency band, or a Supplementary Upload (SUL) frequency band.

In some embodiments, the second adjustment value corresponding to each of the multiple frequency bands is included in capability information of the terminal device.

In some embodiments, at the terminal device side, the method further includes: the terminal device sends the second indication information. In some embodiments, at the network device side, the method further includes: the network device receives the second indication information.

The second indication information is used to indicate that the transmission power of the terminal device is supported to be adjusted through the first adjustment value, or to indicate that the first adjustment value is supported to be determined, or the second indication information is used to indicate that the transmission power of the terminal device is not supported to be adjusted through the first adjustment value, or to indicate that the first adjustment value is not supported to be determined.

Alternatively, in a case that the value of the fourth bit in the second indication information is the first value, the second indication information is used to indicate that the transmission power of the terminal device is supported to be adjusted through the first adjustment value, or to indicate that the first adjustment value is supported to be determined. Alternatively, in a case that the value of the fourth bit in the second indication information is the second value, the second indication information is used to indicate that the transmission power of the terminal device is not supported to be adjusted through the first adjustment value, or to indicate that the first adjustment value is not supported to be determined. Alternatively, the first value may be 1 and the second value may be 0, or the first value may be 0 and the second value may be 1.

Alternatively, in a case that the preset domain or the preset field in the second indication information is configured as the second adjustment value corresponding to each of the multiple frequency bands, the second indication information is used to indicate that the transmission power of the terminal device is supported to be adjusted through the first adjustment value, or to indicate that the first adjustment value is supported to be determined. Alternatively, in a case that the preset domain or the preset field in the second indication information is not configured as the second adjustment value corresponding to each of the multiple frequency bands, the second indication information is used to indicate that the transmission power of the terminal device is not supported to be adjusted through the first adjustment value, or to indicate that the first adjustment value is not supported to be determined.

In some embodiments, the second indication information is included in capability information of the terminal device.

Alternatively, the second adjustment value corresponding to each of the multiple frequency bands and the second indication information may be carried in the same signaling, or may be carried in different signalings.

In some embodiments, at the terminal device side, the method further includes: the terminal device receives the third indication information. In some embodiments, at the network device side, the method further includes: the network device sends the third indication information.

The third indication information is used to indicate that the transmission power of the terminal device is allowed to be adjusted through the first adjustment value, or to indicate that the first adjustment value is allowed to be determined, or the third indication information is used to indicate that the transmission power of the terminal device is not allowed to be adjusted through the first adjustment value, or to indicate that the first adjustment value is not allowed to be determined.

Alternatively, in a case that the value of the fifth bit in the third indication information is the first value, the third indication information is used to indicate that the transmission power of the terminal device is allowed to be adjusted through the first adjustment value, or to indicate that the first adjustment value is allowed to be determined. Alternatively, in a case that the value of the fifth bit in the third indication information is the second value, the third indication information is used to indicate that the transmission power of the terminal device is not allowed to be adjusted through the first adjustment value, or to indicate that the first adjustment value is not allowed to be determined.

In some embodiments, the third indication information is carried in a downlink message.

In some embodiments, the third indication information is carried in radio resource control (RRC) signaling, medium access control (MAC) signaling, or downlink control information (DCI).

The communication method according to the embodiments of the present disclosure will be further described below.

In the related art, the calculation of the target transmission power of the terminal device (that is, the above transmission power of the terminal device) is based on the downlink path loss. However, due to the difference between the uplink propagation loss and the downlink propagation loss and/or the difference between the transmission antenna loss and the reception antenna loss of the terminal device, the calculated target transmission power of the terminal device is different from the actual transmission power, and the reported PHR deviates from the actual transmission PH of the terminal device. In order to solve this problem, the embodiments of the present disclosure propose to introduce the first adjustment value $P_{delta}$ for adjusting the uplink transmission power.

$P_{delta}$ is described below.

$P_{delta}$ is used to describe the value with which the terminal device corrects the currently calculated target transmission power. This value is affected by the difference in spatial propagation losses, and/or the difference between the transmission antenna gain and reception antenna gain of the terminal device, etc. All of these influencing factors or only some of them may be considered when the terminal device corrects its transmission power.

In some embodiments, $P_{delta}= P_{TxLoss}-P_{RxLoss}$. In other embodiments, $P_{delta}= P_{RxLoss}-P_{TxLoss}$. Hereinafter, the communication method of the present disclosure will be described by taking $P_{delta}= P_{TxLoss}- P_{RxLoss}$ as an example. It should be noted that in the case of $P_{delta}= P_{RxLoss}-P_{TxLoss}$, the determination of PH corresponds to the determination manner of $P_{delta}= P_{TxLoss}-P_{RxLoss}$, and the description thereof in the embodiments of the present disclosure will not be repeated.

For $P_{TXLoss}$ and $P_{RxLoss}$, the spatial propagation losses and/or the transmission antenna loss and reception antenna loss of the terminal device are considered.

Alternatively, when the spatial propagation losses and the antenna losses of the terminal device are considered simultaneously, $P_{TxLoss}=$ transmission spatial propagation loss + transmission antenna loss and $P_{RxLoss}=$ reception spatial propagation loss + reception antenna loss.

Alternatively, when only spatial propagation losses are considered, $P_{TxLoss}=$ transmission spatial propagation loss, and $P_{RxLoss}=$ reception spatial propagation loss.

Alternatively, when only the antenna losses of the terminal device are considered, $P_{TxLoss}=$ transmission antenna loss, and $P_{RxLoss}=$ reception antenna loss.

For example, when only the spatial propagation losses are considered, if in the FDD frequency band, the transmission spatial propagation loss is less than the reception spatial propagation loss by XdB, then $P_{delta}$ equals -XdB. For another example, when only the antenna losses of the terminal device are considered, if the transmission antenna loss of the terminal device is less than the reception antenna loss by XdB, then $P_{delta}$ equals -XdB. For another example, when the spatial propagation losses and the antenna losses of the terminal device are considered simultaneously, if in the FDD frequency band, the transmission spatial propagation loss is less than the reception spatial propagation loss by XdB, and the transmission antenna loss of the terminal device is less than the reception antenna loss by XdB, then $P_{delta}$ equals - 2 XdB.

Hereinafter, the adjustment of the transmission power of the terminal device through $P_{delta}$ is described.

When it is determined that the transmission power of the terminal device is $P_{target}$ according to the related art, the corrected transmission power or the adjusted transmission power may be $P_{target}+ P_{delta}$.

$P_{delta}$ includes the difference between uplink spatial propagation loss and downlink spatial propagation loss and/or the difference between transmission antenna loss and reception antenna loss. Alternatively, in any embodiment of the present disclosure, the transmission antenna loss and reception antenna loss may be understood as, or may be referred to as, or may be, the transmission antenna gain and reception antenna gain. For example, the transmission antenna gain of-A dB represents a transmission antenna loss of A dB. For another example, the reception antenna gain of -B dB represents a reception antenna loss of B dB.

Alternatively, the terminal device may obtain the spatial propagation loss of P0-RSRP (that is, the downlink spatial propagation loss) by measuring the reception signal strength RSRP of a downlink reference signal (such as an SSB) and the transmission signal strength P0 of the reference signal at the base station side. Alternatively, in any embodiment of the present disclosure, the reception signal strength may be referred to as the reception power strength, and the transmission signal strength may be referred to as the transmission power strength.

Alternatively, the terminal device may calculate the difference between the spatial propagation losses according to the frequency difference between the uplink and the downlink. For example, the terminal device may calculate the spatial propagation loss of a certain operating frequency according to the spatial propagation loss formula $R = 32.4 +20 * \log_{10}D+20 * \log_{10}M$, and then determine the difference between the uplink spatial propagation loss and the downlink spatial propagation loss according to the formula, the uplink operating frequency and downlink operating frequency. It should be noted that the manner for calculating the spatial path losses is not limited in the embodiments of the present disclosure, or the spatial propagation losses may be calculated in other manners, which are not repeatedly described herein. In the formula $R = 32.4 +20 * \log_{10}D+20 * \log_{10}M$, D is the free spatial propagation distance of the wireless signal with the unit of kilometer, M is the operating frequency with the unit of megahertz (MHz), and R is the loss value with the unit of dB.

Alternatively, the network device may obtain the uplink spatial propagation loss by measuring, for example, the network device may determine the uplink spatial propagation loss according to the SRS sent by the terminal device. However, in the related art, the network device cannot determine the signal strength for sending the SRS by the terminal device, and thus the network device cannot obtain the uplink spatial propagation loss by measuring.

In the embodiments of the present disclosure, it is introduced that the terminal device reports the transmission signal strength for sending the SRS by the terminal device, that is, when the terminal device sends the SRS, the transmission signal strength (SRStx) for transmitting the SRS is reported to the network device, and the network device receives and measures the signal strength of the SRS to obtain the reception signal strength (SRSrx), and the network device may obtain the uplink propagation loss as SRStx-SRSrx. The network device may send the uplink propagation loss to the terminal device, so that the terminal device may obtain the uplink propagation loss and apply the uplink propagation loss to adjustment of the transmission power of the terminal device.

In some embodiments, the number of transmission antenna(s) of the terminal device is typically less than the number of reception antenna(s), which results in the transmission antenna loss (or gain) being different from the reception antenna loss (or gain). For example, if the transmission antenna loss of the terminal device is less than the reception antenna loss by XdB, then $P_{delta}$ equals -XdB. For the terminal device, the transmission antenna loss (or gain) and reception antenna loss (or gain) are known, and the values may be stored in the terminal device and applied to the calculation of $P_{delta}$.

The report of $P_{delta}$ is described below.

Since the transmission power of the terminal device is adjusted compared to the target transmission power obtained in the related art, it is also necessary to consider how to inform the base station of the adjustment value.

In some embodiments, the terminal device may report through the PHR. For example, the terminal device may reflect the $P_{delta}$ or the indication information for the use of the $P_{delta}$ in the PHR reporting, so that the actual transmission power of the terminal device and the headroom can be reflected in the PHR.

In the related art, the PH of the terminal device is the difference between $P_{cmax}$ and $P_{target}$, that is, PH = $P_{cmax}$- $P_{target}$. In the embodiments of the present disclosure, since the transmission power of the terminal device is adjusted through $P_{delta}$, in the embodiments of the present disclosure, PH = $P_{cmax}$- ($P_{target}$+ $P_{delta}$).

In the PHR reporting, $P_{delta}$ may be further reported to the base station, so that the base station can refer to the actual loss difference between the uplink and the downlink.

Alternatively, as described in FIG. 2 and FIG. 3, the terminal device may indicate whether the adjustment value $P_{delta}$ is adopted in the reported PHR through a reserved bit (R bit) in the MAC CE. However, in this method, the base station is only told about whether the current transmission power of the terminal device is adjusted using $P_{delta}$, but the specific adjustment value is not told to the base station.

Alternatively, the terminal device may introduce a new bit to report the adjustment value $P_{delta}$ together.

FIG. 8 is a schematic diagram of another format of the MAC CE according to an embodiment of the present disclosure. As illustrated in FIG. 8, the MAC CE in FIG. 8 is a format of the MAC CE with the fixed size, and in the format of the MAC CE in FIG. 8, one row corresponds to one byte.

R field is a reserved bit, P field is used to indicate whether power backoff is applied, and maximum permissible exposure (MPE) is used to determine whether the effects of the radiation of the terminal device on human body meet the standards.

In FIG. 8, the third to eighth bits from left to right in the first row are used to carry the PH value, the third to eighth bits from left to right in the second row are used to carry the $P_{cmax}$, and the eight bits in the third row are used to carry the $P_{delta}$.

It should be noted that the bits carrying $P_{delta}$ are all of the bits in the third row. In other embodiments, the bits carrying $P_{delta}$ may be a part of bits in the third row, or the bits carrying $P_{delta}$ may be bits in the second row in the MAC CE, and the bits in the third row in the MAC CE carry $P_{cmax}$. The position of bits for carrying $P_{delta}$ is not limited in the embodiments of the present disclosure.

In some embodiments, the difference between uplink spatial propagation loss and downlink spatial propagation loss and the difference between the transmission antenna loss and reception antenna loss of the terminal device are generally relatively constant, and these two differences are related to the operating frequency band. Therefore, the adjustment value $P_{delta}$ of each frequency band may be reported through the capability information of the terminal device, which is relatively static capability.

In some embodiments, whether the adjustment value $P_{delta}$ is used in the current transmission power may be indicated in actual transmission in combination with the above PHR reporting manner. Of course, a default manner may also be adopted. For example, upon reporting the adjustment value capability information $P_{delta}$ of each frequency band, the terminal is by default deemed to adopt this adjustment value $P_{delta}$ for the transmission power.

Hereinafter, the capability of adjustment through $P_{delta}$ and the control of the base station are described below.

Alternatively, the method by which the terminal device adjusts its transmission power (adjusting the transmission power through $P_{delta}$) may be considered as a performance, and the terminal device needs to tell the base station whether it supports the performance, that is, the corresponding capability of the terminal device. There are two manners to report this capability.

Manner 1: It is implicitly told to the base station that the terminal device supports this performance by reporting the adjustment value $P_{delta}$ as described above. In this case, only the $P_{delta}$ in each frequency band of the terminal device needs to be reported.

Manner 2: The separate capability information is defined. In this case, the capability information of the terminal device will include the following contents: whether the terminal device supports adjusting the transmission power through $P_{delta}$ and $P_{delta}$ in each frequency band of the terminal device.

Alternatively, in addition to the reporting of the capability of the terminal device, the control of the base station may be further introduced, that is, the base station may determine whether the terminal device adjusts its transmission power through $P_{delta}$. Only when the base station allows the terminal device to adjust the transmission power, this performance is activated on the terminal device side, otherwise it is not activated. For the specific control method of the base station, control signaling (signaling such as RRC or MAC or DCI) is defined, for example, $P_{delta}$ adjustment instruction is activated (EnablePdelta) or the $P_{delta}$ adjustment instruction is not activated (DisablePdelta).

The embodiments of the present disclosure provide a method for adjusting the transmission power. In this method, the $P_{delta}$ is introduced to correct the currently calculated target transmission power to overcome the difference between the target transmission power and the actual transmission power of the terminal device caused by the difference between the uplink propagation loss and the downlink propagation loss, the difference between the transmission antenna(s) and reception antenna(s) of the terminal device, and etc. The problem that the reported value in the PHR deviates from the real transmission PH of the terminal device, which is caused by the aforementioned differences, is also overcome. In addition, the embodiments of the present disclosure propose the definition of $P_{delta}$, the adjustment of transmission power, the reporting of related signaling, and the like.

In the embodiments of the present disclosure, $P_{delta}$ is introduced to adjust the power, so that the transmission power of the terminal device is closer to the actual power required to be transmitted by the terminal device, and the difference between spatial propagation losses caused by the difference between uplink the frequency and the downlink frequency, the difference between losses caused by the difference between transmission antenna(s) and reception antenna(s) of the terminal device, or the like can be overcome.

According to the communication method based on the embodiments of the present disclosure, the problem that the transmission power actually required by the terminal device is inconsistent with the currently calculated transmission power, and the problem that the reported value in the PHR is inconsistent with the actual situation can be solved.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above detailed description may be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, various embodiments described in the present disclosure and/or the technical features in various embodiments may be arbitrarily combined with the prior art, and the technical solutions obtained after the combination should also fall within the scope of protection of the present disclosure.

It should also be understood that in various method embodiments of the present disclosure, the size of the sequence number of the above processes does not mean the sequence of execution, and the sequence of execution of each process should be determined by its function and internal logic, and should not constitute any limitation on the implementation of the embodiments of the present disclosure. In addition, in the embodiments of the present disclosure, the terms "downlink", "uplink", and "sidelink" are used to indicate the transmission direction of signals or data. Here, "downlink" is used to indicate that the transmission direction of signals or data is the first direction sent from the station to the UE of the cell, "uplink" is used to indicate that the transmission direction of signals or data is the second direction sent from the UE of the cell to the station, and "sidelink" is used to indicate that the transmission direction of signals or data is the third direction sent from the UE1 to the UE2. For example, "downlink signal" indicates that the transmission direction of the signal is the first direction. In addition, in the embodiments of the present disclosure, the term "and/or" is only used for describing one kind of association relationship between association objects, and indicates that there may be three kinds of relationships. Specifically, A and/or B may represent three cases that A exists alone, A and B exist simultaneously, and B exists alone. In addition, the character "/" in the present disclosure generally indicates that there is an "or" relationship between the association objects.

FIG. 9 is a schematic diagram of the structure and composition of the communication apparatus according to an embodiment of the present disclosure, and the communication apparatus is applied to a terminal device. As illustrated in FIG. 9, the communication apparatus 900 includes a communication unit 901.

The communication unit 901 is configured to send the first information including the first PH, and the first PH is determined according to a transmission power of the terminal device and the first adjustment value.

In some embodiments, the communication apparatus 900 may further include a determining unit for determining the first information.

In some embodiments, the first adjustment value is determined according to at least one of: the first difference between an uplink spatial propagation loss and a downlink spatial propagation loss, or the second difference between a transmission antenna loss of the terminal device and a reception antenna loss of the terminal device.

In some embodiments, the first adjustment value is determined according to at least one of: the first result of a difference between an uplink spatial propagation loss and a downlink spatial propagation loss, or the second result of a difference between a transmission antenna loss of the terminal device and a reception antenna loss of the terminal device;

or the first adjustment value is determined according to at least one of: the third result of a difference between the downlink spatial propagation loss and the uplink spatial propagation loss, or the fourth result of a difference between the reception antenna loss of the terminal device and the transmission antenna loss of the terminal device.

In some embodiments, the first adjustment value is the first result; or the first adjustment value is the second result; or the first adjustment value is a sum of the first result and the second result; or the first adjustment value is the third result; or the first adjustment value is the fourth result; or the first adjustment value is a sum of the third result and the fourth result.

In some embodiments, the first result or the third result is determined according to an uplink operating frequency and a downlink operating frequency.

In some embodiments, the first result is determined according to $20\times lg\ M1-20\times lg\ M2$, the third result is determined according to $20\times lg\ M2-20\times lg\ M1$.

M1 is the uplink operating frequency and M2 is the downlink operating frequency.

In some embodiments, the downlink spatial propagation loss is determined according to the first transmission parameter information for sending the first reference signal by a network device and the first reception parameter information for receiving the first reference signal by the terminal device.

In some embodiments, the downlink spatial propagation loss is determined according to a difference between the first transmission parameter information and the first reception parameter information.

In some embodiments, the communication unit 901 is further configured to receive the uplink spatial propagation loss. The uplink spatial propagation loss is determined according to the second transmission parameter information for sending the second reference signal by the terminal device and the second reception parameter information for receiving the second reference signal by the network device.

In some embodiments, the uplink spatial propagation loss is determined according to a difference between the second transmission parameter information and the second reception parameter information.

In some embodiments, at least one of the second result, the fourth result, the transmission antenna loss of the terminal device, or the reception antenna loss of the terminal device is determined according to configuration information of the terminal device, is predefined by the terminal device, or is agreed in a protocol.

In some embodiments, the first PH is determined according to a sum of the transmission power of the terminal device and the first adjustment value, or the first PH is determined according to a difference between the transmission power of the terminal device and the first adjustment value.

In some embodiments, the first PH is determined according to the transmission power of the terminal device, the first adjustment value, and a maximum transmission power configured for the terminal device.

In some embodiments, the first PH is determined according to a difference between the maximum transmission power configured for the terminal device and the first numerical value.

The first numerical value is determined according to a sum of the transmission power of the terminal device and the first adjustment value, or the first numerical value is determined according to a difference between the transmission power of the terminal device and the first adjustment value.

In some embodiments, the first information further includes the first adjustment value, and/or the first information further includes the first indication information for indicating use of the first adjustment value.

In some embodiments, the first information further includes one or more first bits carrying the first indication information, and the one or more first bits include(s) reserved bit(s) and/or bit(s) agreed in a protocol.

In some embodiments, the first information further includes one or more second bits carrying the first adjustment value.

In some embodiments, the one or more second bits are included in first byte(s), the first byte(s) is one or more bytes following second byte(s), and the second byte(s) carries a maximum transmission power configured for the terminal device.

In some embodiments, the communication unit 901 is further configured to send the second adjustment value corresponding to each of multiple frequency bands. The second adjustment values include the first adjustment value.

In some embodiments, the second adjustment value corresponding to each of the plurality of frequency bands is included in capability information of the terminal device.

In some embodiments, the communication unit 901 is further configured to send the second indication information. The second indication information is used to indicate that the transmission power of the terminal device is supported to be adjusted through the first adjustment value, or to indicate that the first adjustment value is supported to be determined, or the second indication information is used to indicate that the transmission power of the terminal device is not supported to be adjusted through the first adjustment value, or to indicate that the first adjustment value is not supported to be determined.

In some embodiments, the second indication information is included in capability information of the terminal device.

In some embodiments, the communication unit 901 is further configured to receive the third indication information. The third indication information is used to indicate that the transmission power of the terminal device is allowed to be adjusted through the first adjustment value, or to indicate that the first adjustment value is allowed to be determined, or the third indication information is used to indicate that the transmission power of the terminal device is not allowed to be adjusted through the first adjustment value, or to indicate that the first adjustment value is not allowed to be determined.

In some embodiments, the third indication information is carried in RRC signaling, MAC signaling, or DCI.

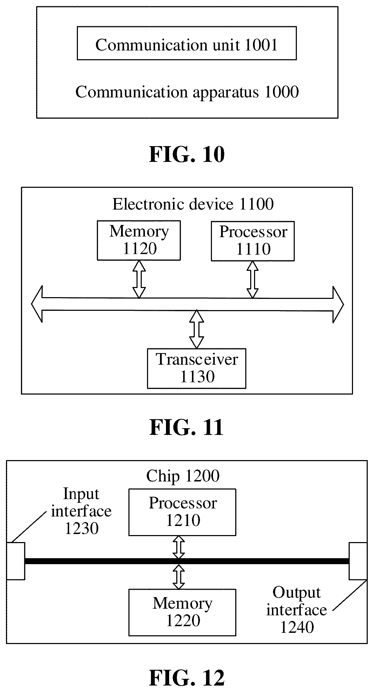

FIG. 10 is a schematic diagram of the structure and composition of another communication apparatus according to an embodiment of the present disclosure. The communication apparatus is applied to a network device. As illustrated in FIG. 10, the communication apparatus 1000 includes a communication unit 1001.

The communication unit 1001 is configured to receive the first information including the first PH. The first PH is determined according to a transmission power of a terminal device and the first adjustment value.

In some embodiments, the communication apparatus 1000 further includes an adjustment unit. The adjustment unit is configured to adjust scheduling information of the terminal device.

In some embodiments, the first adjustment value is determined according to at least one of: the first difference between an uplink spatial propagation loss and a downlink spatial propagation loss, or the second difference between a transmission antenna loss of the terminal device and a reception antenna loss of the terminal device.

In some embodiments, the first adjustment value is determined according to at least one of: the first result of a difference between an uplink spatial propagation loss and a downlink spatial propagation loss, or the second result of a difference between a transmission antenna loss of the terminal device and a reception antenna loss of the terminal device; or the first adjustment value is determined according to at least one of: the third result of a difference between the downlink spatial propagation loss and the uplink spatial propagation loss, or the fourth result of a difference between the reception antenna loss of the terminal device and the transmission antenna loss of the terminal device.

In some embodiments, the first adjustment value is the first result; or the first adjustment value is the second result; or the first adjustment value is a sum of the first result and the second result; or the first adjustment value is the third result; or the first adjustment value is the fourth result; or the first adjustment value is a sum of the third result and the fourth result.

In some embodiments, the first result or the third result is determined according to an uplink operating frequency and a downlink operating frequency.

In some embodiments, the first result is determined according to $20 \times \lg M1 - 20 \times \lg M2$, and the third result is determined according to $20 \times \lg M2 - 20 \times \lg M1$.

M1 is the uplink operating frequency and M2 is the downlink operating frequency.

In some embodiments, the downlink spatial propagation loss is determined according to the first transmission parameter information for sending the first reference signal by the network device and the first reception parameter information for receiving the first reference signal by the terminal device.

In some embodiments, the downlink spatial propagation loss is determined according to a difference between the first transmission parameter information and the first reception parameter information.

In some embodiments, the communication unit 1001 is further configured to send the uplink spatial propagation loss. The uplink spatial propagation loss is determined according to the second transmission parameter information for sending the second reference signal by the terminal device and the second reception parameter information for receiving the second reference signal by the network device.

In some embodiments, the uplink spatial propagation loss is determined according to a difference between the second transmission parameter information and the second reception parameter information.

In some embodiments, at least one of the second result, the fourth result, the transmission antenna loss of the terminal device, or the reception antenna loss of the terminal device is determined according to configuration information of the terminal device, is predefined by the terminal device, or is agreed in a protocol.

In some embodiments, the first PH is determined according to a sum of the transmission power of the terminal device and the first adjustment value, or the first PH is determined according to a difference between the transmission power of the terminal device and the first adjustment value.

In some embodiments, the first PH is determined according to the transmission power of the terminal device, the first adjustment value, and a maximum transmission power configured for the terminal device.

In some embodiments, the first PH is determined according to a difference between the maximum transmission power configured for the terminal device and the first numerical value.

The first numerical value is determined according to a sum of the transmission power of the terminal device and the first adjustment value, or the first numerical value is determined according to a difference between the transmission power of the terminal device and the first adjustment value.

In some embodiments, the first information further includes the first adjustment value, and/or the first information further includes the first indication information for indicating use of the first adjustment value.

In some embodiments, the first information further includes one or more first bits carrying the first indication information, and the one or more first bits include(s) reserved bit(s) and/or bit(s) agreed in a protocol.

In some embodiments, the first information further includes one or more second bits carrying the first adjustment value.

In some embodiments, the one or more second bits are included in the first byte(s), the first byte(s) is one or more bytes following second byte(s), and the second byte(s) carries a maximum transmission power configured for the terminal device.

In some embodiments, the communication unit 1001 is further configured to receive the second adjustment value corresponding to each of multiple frequency bands. The second adjustment values include the first adjustment value.

In some embodiments, the second adjustment value corresponding to each of the multiple frequency bands is included in capability information of the terminal device.

In some embodiments, the communication unit 1001 is further configured to receive the second indication information. The second indication information is used to indicate that the transmission power of the terminal device is supported to be adjusted through the first adjustment value, or to indicate that the first adjustment value is supported to be determined, or the second indication information is used to indicate that the transmission power of the terminal device is not supported to be adjusted through the first adjustment value, or to indicate that the first adjustment value is not supported to be determined.

In some embodiments, the second indication information is included in capability information of the terminal device.

In some embodiments, the communication unit 1001 is further configured to send the third indication information. The third indication information is used to indicate that the transmission power of the terminal device is allowed to be adjusted through the first adjustment value, or to indicate that the first adjustment value is allowed to be determined, or the third indication information is used to indicate that the transmission power of the terminal device is not allowed to be adjusted through the first adjustment value, or to indicate that the first adjustment value is not allowed to be determined.

In some embodiments, the third indication information is carried in RRC signaling, MAC signaling, or DCI.

Those skilled in the art should understand that the related description of the above communication apparatus according to the embodiment of the present disclosure may be understood with reference to the related description of the communication method according to the embodiments of the present disclosure.

FIG. 11 is a schematic structural diagram of an electronic device according to an embodiment of the present disclosure. The electronic device 1100 may include one of the following: a terminal device and a network device. The electronic device 1100 illustrated in FIG. 11 may include a processor 1110 and a memory 1120. The memory 1120 is configured to store a computer program, and the processor 1110 is configured to invoke and execute the computer program stored in the memory 1120 to cause the electronic device 1100 to perform the method of any one embodiment described above. Alternatively, the processor 1110 is configured to invoke and execute a computer program stored in the memory 1120 to cause the terminal device to perform the method of any one embodiment described above. For another example, the processor 1110 is configured to invoke and execute a computer program stored in the memory 1120 to cause the network device to perform the method of any one embodiment described above.

Alternatively, the memory 1120 may be a separate device independent of the processor 1110 or may be integrated in the processor 1110.

In some embodiments, as illustrated in FIG. 11, the electronic device 1100 may further include a transceiver 1130, and the processor 1110 may control the transceiver 1130 to communicate with other devices. Specifically, the processor may control the transceiver to transmit information or data to other devices, or receive information or data transmitted by other devices.

The transceiver 1130 may include a transmitter and a receiver. The transceiver 1130 may further include antennas, and the number of antennas may be one or more.

In some embodiments, the electronic device 1100 may specifically be the network device of the embodiments of the present disclosure, and the electronic device 1100 may implement corresponding processes implemented by the network device in various methods of the embodiments of the present disclosure, which will not be described herein for the sake of brevity.

In some embodiments, the electronic device 1100 may specifically be the mobile terminal device/terminal device of the embodiments of the present disclosure, and the electronic device 1100 may implement corresponding processes implemented by the mobile terminal device/terminal device in various methods of the embodiments of the present disclosure, which will not be described herein for the sake of brevity.

Embodiments of the present disclosure further provide a computer storage medium. The computer storage medium stores one or more programs, and the one or more programs may be executed by one or more processors to implement the communication method of any one embodiment of the present disclosure.

In some embodiments, the computer readable storage medium may be applied to the terminal device or the network device in the embodiments of the present disclosure, and the computer program causes the computer to execute corresponding processes implemented by the terminal device or the network device in various methods of the embodiments of the present disclosure, which will not be described herein for the sake of brevity.

FIG. 12 is a schematic structural diagram of a chip according to an embodiment of the present disclosure. The chip 1200 illustrated in FIG. 12 includes a processor 1210. The processor 1210 is configured to invoke and execute a computer program from a memory to implement the method of any one embodiment of the present disclosure.

In some embodiments, as illustrated in FIG. 12, the chip 1200 may further include a memory 1220. The processor 1210 may invoke and execute a computer program from the memory 1220 to implement the method in the embodiments of the present disclosure.

The memory 1220 may be a separate device independent of the processor 1210, or may be integrated in the processor 1210.

In some embodiments, the chip 1200 may further include an input interface 1230. The processor 1210 may control the input interface 1230 to communicate with other devices or chips, specifically, may acquire information or data sent by other devices or chips.

In some embodiments, the chip 1200 may further include an output interface 1240. The processor 1210 may control the output interface 1240 to communicate with other devices or chips, specifically, may output information or data to other devices or chips.

In some embodiments, the chip may be applied to the network device in the embodiments of the present disclosure, and the chip may implement corresponding processes implemented by the network device in various methods of the embodiments of the present disclosure, which will not be described here for the sake of brevity.

In some embodiments, the chip may be applied to the mobile terminal device/terminal device in the embodiments of the present disclosure, and the chip may implement corresponding processes implemented by the mobile terminal device/terminal device in various methods of the embodiments of the present disclosure, which will not be described here for the sake of brevity.

It should be understood that the chip mentioned in the embodiments of the present disclosure may also be referred to as a system-level chip, a system chip, a chip system, a system-on-chip, or the like.

Embodiments of the present disclosure further provide a computer program product. The computer program product includes a computer storage medium. The computer storage medium stores a computer program. The computer program includes instructions executable by at least one processor that, when executed by the at least one processor, implement the communication method of any one embodiment of the present disclosure.

In some embodiments, the computer program product may be applied to the terminal device or the network device in the embodiments of the present disclosure, and the computer program instructions cause the computer to perform corresponding processes implemented by the terminal device or the network device in various methods of the embodiments of the present disclosure, which will not be described herein for the sake of brevity.

Alternatively, the computer program product in the embodiments of the present disclosure may also be referred to as a software product in other embodiments.

Embodiment of the present disclosure further provides a computer program. The computer program causes a computer to perform the communication method according to any embodiment of the present disclosure.

In some embodiments, the computer program may be applied to the terminal device or the network device in the embodiments of the present disclosure, and when the computer program is run on a computer, the computer program causes the computer to perform corresponding processes implemented by the terminal device or the network device in various methods of the embodiments of the present disclosure, which will not be described herein for the sake of brevity.

The processor, the communication apparatus, or the chip of the embodiments of the present disclosure may be an integrated circuit chip with a signal processing capability. During an implementation process, each operation in the above method embodiments may be completed via an integrated logic circuit of hardware in the processor or an instruction in a software form. The processor, the communication apparatus or chip described above may include an integration of any one or more of the following: a universal processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), embedded neural-network processing units (NPU), a controller, a microcontroller, a microprocessor, a programmable logic device, a discrete gate or a transistor logic device, a discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory or computer storage medium in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory or computer storage medium is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

In any one embodiment of the present disclosure, a time interval, a time period, a time range, a duration, a time window, etc. may include all of the endpoint times, or may include part of the endpoint times (for example, including the left endpoint time but not including the right endpoint time, or including the right endpoint time but not including the left endpoint time), or may not include the endpoint times.

When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A communication method, comprising:
   sending, by a terminal device, first information comprising first power headroom (PH), wherein the first PH is determined according to a transmission power of the terminal device and a first adjustment value.

2. The method of claim 1, wherein the first adjustment value is determined according to at least one of: a first difference between an uplink spatial propagation loss and a downlink spatial propagation loss, or a second difference between a transmission antenna loss of the terminal device and a reception antenna loss of the terminal device.

3. The method of claim 1 or 2, wherein the first adjustment value is determined according to at least one of: a first result of a difference between an uplink spatial propagation loss and a downlink spatial propagation loss, or a second result of a difference between a transmission antenna loss of the terminal device and a reception antenna loss of the terminal device; or
   the first adjustment value is determined according to at least one of: a third result of a difference between the downlink spatial propagation loss and the uplink spatial propagation loss, or a fourth result of a difference between the reception antenna loss of the terminal device and the transmission antenna loss of the terminal device.

4. The method of claim 3, wherein the first adjustment value is the first result; or

   the first adjustment value is the second result; or
   the first adjustment value is a sum of the first result and the second result; or
   the first adjustment value is the third result; or
   the first adjustment value is the fourth result; or
   the first adjustment value is a sum of the third result and the fourth result.

5. The method of claim 3 or 4, wherein the first result or the third result is determined according to an uplink operating frequency and a downlink operating frequency.

6. The method of claim 5, wherein the first result is determined according to $20 \times \lg M1 - 20 \times \lg M2$, the third result is determined according to $20 \times \lg M2 - 20 \times \lg M1$, M1 is the uplink operating frequency, and M2 is the downlink operating frequency.

7. The method of any one of claims 2 to 4, wherein the downlink spatial propagation loss is determined according to first transmission parameter information for sending a first reference signal by a network device and first reception parameter information for receiving the first reference signal by the terminal device.

8. The method of claim 7, wherein the downlink spatial propagation loss is determined according to a difference between the first transmission parameter information and the first reception parameter information.

9. The method of any one of claims 2 to 4, 7 and 8, further comprising:
   receiving, by the terminal device, the uplink spatial propagation loss, wherein the uplink spatial propagation loss is determined according to second transmission parameter information for sending a second reference signal by the terminal device and second reception parameter information for receiving the second reference signal by a network device.

10. The method of claim 9, wherein the uplink spatial propagation loss is determined according to a difference between the second transmission parameter information and the second reception parameter information.

11. The method of any one of claims 3 to 10, wherein at least one of the second result, the fourth result, the transmission antenna loss of the terminal device, or the reception antenna loss of the terminal device is determined according to configuration information of the terminal device, is predefined by the terminal device, or is agreed in a protocol.

12. The method of any one of claims 1 to 11, wherein the first PH is determined according to a sum of the transmission power of the terminal device and the first adjustment value, or the first PH is determined according to a difference between the transmission power of the terminal device and the first adjustment value.

13. The method of claims 1 to 12, wherein the first PH is determined according to the transmission power of the terminal device, the first adjustment value, and a maximum transmission power configured for the terminal device.

14. The method of claim 13, wherein the first PH is determined according to a difference between the maximum transmission power configured for the terminal device and a first numerical value, and the first numerical value is determined according to a sum of the transmission power of the terminal device and the first adjustment value, or the first numerical value is determined according to a difference between the transmission power of the terminal device and the first adjustment value.

15. The method of any one of claims 1 to 14, wherein the first information further comprises the first adjustment value, and/or the first information further comprises first indication information for indicating use of the first adjustment value.

16. The method of claim 15, wherein the first information further comprises one or more first bits carrying the first indication information, and the one or more first bits comprise(s) reserved bit(s) and/or bit(s) agreed in a protocol.

17. The method of claim 15 or 16, wherein the first information further comprises one or more second bits carrying the first adjustment value.

18. The method of claim 17, wherein the one or more second bits are comprised in first byte(s), the first byte(s) is one or more bytes following second byte(s), and the second byte(s) carries a maximum transmission power configured for the terminal device.

19. The method of any one of claims 1 to 18, further comprising:
sending, by the terminal device, a second adjustment value corresponding to each of a plurality of frequency bands, wherein second adjustment values comprise the first adjustment value.

20. The method of claim 19, wherein the second adjustment value corresponding to each of the plurality of frequency bands is comprised in capability information of the terminal device.

21. The method of any one of claims 1 to 20, further comprising:
sending, by the terminal device, second indication information, wherein the second indication information is used to indicate that the transmission power of the terminal device is supported to be adjusted through the first adjustment value, or to indicate that the first adjustment value is supported to be determined, or the second indication information is used to indicate that the transmission power of the terminal device is not supported to be adjusted through the first adjustment value, or to indicate that the first adjustment value is not supported to be determined.

22. The method of claim 21, wherein the second indication information is comprised in capability information of the terminal device.

23. The method of any one of claims 1 to 22, further comprising:
receiving, by the terminal device, third indication information, wherein the third indication information is used to indicate that the transmission power of the terminal device is allowed to be adjusted through the first adjustment value, or to indicate that the first adjustment value is allowed to be determined, or the third indication information is used to indicate that the transmission power of the terminal device is not allowed to be adjusted through the first adjustment value, or to indicate that the first adjustment value is not allowed to be determined.

24. The method of claim 23, wherein the third indication information is carried in radio resource control (RRC) signaling, medium access control (MAC) signaling, or downlink control information (DCI).

25. A communication method, comprising:
receiving, by a network device, first information comprising first power headroom (PH), wherein the first PH is determined according to a transmission power of a terminal device and a first adjustment value.

26. The method of claim 25, wherein the first adjustment value is determined according to at least one of: a first difference between an uplink spatial propagation loss and a downlink spatial propagation loss, or a second difference between a transmission antenna loss of the terminal device and a reception antenna loss of the terminal device.

27. The method of claim 25 or 26, wherein the first adjustment value is determined according to at least one of: a first result of a difference between an uplink spatial propagation loss and a downlink spatial propagation loss, or a second result of a difference between a transmission antenna loss of the terminal device and a reception antenna loss of the terminal device; or
the first adjustment value is determined according to at least one of: a third result of a difference between the downlink spatial propagation loss and the uplink spatial propagation loss, or a fourth result of a difference between the reception antenna loss of the terminal device and the transmission antenna loss of the terminal device.

28. The method of claim 27, wherein the first adjustment value is the first result; or

the first adjustment value is the second result; or
the first adjustment value is a sum of the first result and the second result; or
the first adjustment value is the third result; or
the first adjustment value is the fourth result; or
the first adjustment value is a sum of the third result and the fourth result.

29. The method of claim 27 or 28, wherein the first result or the third result is determined according to an uplink operating frequency and a downlink operating frequency.

30. The method of claim 29, wherein the first result is determined according to $20 \times 1g\ M1 - 20 \times 1g\ M2$, the third result is determined according to $20 \times 1g\ M2 - 20 \times 1g\ M1$, M1 is the uplink operating frequency, and M2 is the downlink operating frequency.

31. The method of any one of claims 26 to 28, wherein the downlink spatial propagation loss is determined according to first transmission parameter information for sending a first reference signal by the network device and first reception parameter information for receiving the first reference signal by a terminal device.

32. The method of claim 31, wherein the downlink spatial propagation loss is determined according to a difference between the first transmission parameter information and the first reception parameter information.

33. The method of any one of claims 26 to 28, 31 and 32, further comprising:
sending, by the network device, the uplink spatial propagation loss, wherein the uplink spatial propagation loss is determined according to second transmission parameter information for sending a second reference signal by a terminal device and second reception parameter information for receiving the second reference signal by the network device.

34. The method of claim 33, wherein the uplink spatial propagation loss is determined according to a difference between the second transmission parameter information and the second reception parameter information.

35. The method of any one of claims 27 to 34, wherein at least one of the second result, the fourth result, the transmission antenna loss of the terminal device, or the reception antenna loss of the terminal device is determined according to configuration information of the terminal device, is predefined by the terminal device, or is agreed in a protocol.

36. The method of any one of claims 25 to 35, wherein the first PH is determined according to a sum of the transmission power of the terminal device and the first adjustment value, or the first PH is determined according to a difference between the transmission power of the terminal device and the first adjustment value.

37. The method of any one of claims 25 to 36, wherein the first PH is determined according to the transmission power of the terminal device, the first adjustment value, and a maximum transmission power configured for the terminal device.

38. The method of claim 37, wherein the first PH is determined according to a difference between the maximum transmission power configured for the terminal device and a first numerical value, and the first numerical value is determined according to a sum of the transmission power of the terminal device and the first adjustment value, or the first numerical value is determined according to a difference between the transmission power of the terminal device and the first adjustment value.

39. The method of any one of claims 25 to 38, wherein the first information further comprises the first adjustment value, and/or the first information further comprises first indication information for indicating use of the first adjustment value.

40. The method of claim 39, wherein the first information further comprises one or more first bits carrying the first indication information, and the one or more first bits comprise(s) reserved bit(s) and/or bit(s) agreed in a protocol.

41. The method of claim 39 or 40, wherein the first information further comprises one or more second bits carrying the first adjustment value.

42. The method of claim 41, wherein the one or more second bits are comprised in first byte(s), the first byte(s) is one or more bytes following second byte(s), and the second byte(s) carries a maximum transmission power configured for the terminal device.

43. The method of any one of claims 25 to 42, further comprising:
receiving, by the network device, a second adjustment value corresponding to each of a plurality of frequency bands, wherein second adjustment values comprise the first adjustment value.

44. The method of claim 43, wherein the second adjustment value corresponding to each of the plurality of frequency bands is comprised in capability information of the terminal device.

45. The method of any one of claims 25 to 44, further comprising:
receiving, by the network device, second indication information, wherein the second indication information is used to indicate that the transmission power of the terminal device is supported to be adjusted through the first adjustment value, or to indicate that the first adjustment value is supported to be determined, or the second indication information is used to indicate that the transmission power of the terminal device is not supported to be adjusted through the first adjustment value, or to indicate that the first adjustment value is not supported to be determined.

46. The method of claim 45, wherein the second indication information is comprised in capability information of the terminal device.

47. The method of any one of claims 25 to 46, further comprising:
sending, by the network device, third indication information, wherein the third indication information is used to indicate that the transmission power of the terminal device is allowed to be adjusted through the first adjustment value, or to indicate that the first adjustment value is allowed to be determined, or the third indication information is used to indicate that the transmission power of the terminal device is not allowed to be adjusted through the first adjustment value, or to indicate that the first adjustment value is not allowed to be determined.

48. The method of claim 47, wherein the third indication information is carried in radio resource control (RRC) signaling, medium access control (MAC) signaling, or downlink control information (DCI).

49. A communication apparatus, comprising:
a communication unit, configured to send first information comprising first power headroom (PH), wherein the first PH is determined according to a transmission power of the terminal device and a first adjustment value.

50. A communication apparatus, comprising:
a communication unit, configured to receive first information comprising first power headroom (PH), wherein the first PH is determined according to a transmission power of a terminal device and a first adjustment value.

51. A terminal device, comprising: a processor and a memory,

wherein the memory is configured to store a computer program, and
the processor is configured to invoke and run a computer program stored in the memory to cause the terminal device to perform the method of any one of claims 1 to 24.

52. A network device comprising: a processor and a memory,

wherein the memory is configured to store a computer program, and
the processor is configured to invoke and run a computer program stored in the memory to cause the network device to perform the method of any one of claims 25 to 48.

53. A computer storage medium storing one or more programs executable by one or more processors to implement the method of any one of claims 1 to 24 or any one of claims 25 to 48.

54. A chip comprising: a processor for invoking and running a computer program from a memory to implement the method of any one of claims 1 to 24 or any one of claims 25 to 48.

55. A computer program product comprising a computer storage medium storing a computer program, wherein the computer program comprises instructions executable by at least one processor that, when executed by the at least one processor, implement the method of any one of claims 1 to 24 or any one of claims 25 to 48.

56. A computer program causing a computer to perform the method of any one of claims 1 to 24 or any one of claims 25 to 48.

**FIG. 1**

| R | R | PH (Type 1, PCell) |
|---|---|---|
| MPE or R | | $P_{CMAX,f,c}$ |

**FIG. 2**

| $C_7$ | $C_6$ | $C_5$ | $C_4$ | $C_3$ | $C_2$ | $C_1$ | R |
|---|---|---|---|---|---|---|---|
| P | V | PH (Type 2, SpCell of Other MAC entities) | | | | | |
| R | R | $P_{CMAX,f,c}$ 1 | | | | | |
| P | V | PH (Type 1, PCell) | | | | | |
| R | R | $P_{CMAX,f,c}$ 2 | | | | | |
| P | V | PH (Type X, Serving Cell 1) | | | | | |
| R | R | $P_{CMAX,f,c}$ 3 | | | | | |
| ... | | | | | | | |
| P | V | PH (Type X, Serving Cell n) | | | | | |
| R | R | $P_{CMAX,f,c}$ m | | | | | |

## FIG. 3

Base station antenna

Downlink path loss

Spatial propagation loss

Terminal device antenna

## FIG. 4

2T8R terminal device

**FIG. 5**

The terminal device sends the first information including the first PH, and the first PH is determined according to a transmission power of the terminal device and the first adjustment value — S601

**FIG. 6**

A network device receives the first information including the first PH, and the first PH is determined according to a transmission power of the terminal device and the first adjustment value — S701

**FIG. 7**

| P | R | PH |
|---|---|---|
| MPE or R | | $P_{cmax}$ |
| $P_{delta}$ | | |

**FIG. 8**

Communication unit 901

Communication apparatus 900

**FIG. 9**

Communication unit 1001

Communication apparatus 1000

**FIG. 10**

Electronic device 1100

Memory
1120

Processor
1110

Transceiver
1130

**FIG. 11**

Chip 1200

Input
interface
1230

Processor
1210

Memory
1220

Output
interface
1240

**FIG. 12**

## INTERNATIONAL SEARCH REPORT

| | International application No. |
|---|---|
| | **PCT/CN2023/107068** |

### A.    CLASSIFICATION OF SUBJECT MATTER

H04W52/00(2009.01)i

According to International Patent Classification (IPC) or to both national classification and IPC

### B.    FIELDS SEARCHED

Minimum documentation searched (classification system followed by classification symbols)

IPC：H04W H04B H04Q

Documentation searched other than minimum documentation to the extent that such documents are included in the fields searched

Electronic data base consulted during the international search (name of data base and, where practicable, search terms used)

CNTXT, ENTXTC, WPABS, VEN, ENTXT, 3GPP: 功率余量, 发送, 发射, 功率, 调整, 调节, 修正, 偏移, 损耗, 路损, 路径, 传播, 天线, PH, transmi+, power, adjust+, Loss

### C.    DOCUMENTS CONSIDERED TO BE RELEVANT

| Category* | Citation of document, with indication, where appropriate, of the relevant passages | Relevant to claim No. |
|---|---|---|
| X | CN 109151979 A (HUAWEI TECHNOLOGIES CO., LTD.) 04 January 2019 (2019-01-04) claims 1-16, and description, paragraphs [0043]-[0180] | 1-56 |
| X | US 2021289451 A1 (SAMSUNG ELECTRONICS CO., LTD.) 16 September 2021 (2021-09-16) claims 15-40, and description, paragraphs [0087]-[0228] | 1-56 |
| A | WO 2022063102 A1 (VIVO MOBILE COMMUNICATION CO., LTD.) 31 March 2022 (2022-03-31) entire document | 1-56 |
| A | INTERDIGITAL COMMUNICATIONS. "Dual Connectivity Power Headroom Reporting" *3GPP TSG RAN WG2 #85bis, R2-141351*, 04 April 2014 (2014-04-04), entire document | 1-56 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2023** | **22 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/107068**

| Patent document cited in search report | | | Publication date (day/month/year) | Patent family member(s) | | | Publication date (day/month/year) |
|---|---|---|---|---|---|---|---|
| CN | 109151979 | A | 04 January 2019 | WO | 2018228536 | A1 | 20 December 2018 |
| US | 2021289451 | A1 | 16 September 2021 | EP | 3501213 | A1 | 26 June 2019 |
| | | | | EP | 3962185 | A1 | 02 March 2022 |
| | | | | KR | 20190033646 | A | 29 March 2019 |
| | | | | US | 2023141880 | A1 | 11 May 2023 |
| | | | | JP | 2019525666 | A | 05 September 2019 |
| | | | | WO | 2018034541 | A1 | 22 February 2018 |
| | | | | CN | 107770855 | A | 06 March 2018 |
| | | | | CN | 115348655 | A | 15 November 2022 |
| WO | 2022063102 | A1 | 31 March 2022 | CN | 114258124 | A | 29 March 2022 |

Form PCT/ISA/210 (patent family annex) (July 2022)